# EUROPEAN PATENT APPLICATION

(11) **EP 4 354 176 A1**
(43) Date of publication of application: **17.04.2024**
(21) Application number: 21948869.9
(22) Date of filing: 09.07.2021
(51) Int. Cl.: G01S 7/484, G01S 7/4861

(54) **METHOD AND DEVICE FOR DETECTION CONTROL**

(71) Applicant: Huawei Technologies Co., Ltd., Longgang Shenzhen, Guangdong 518129 (CN)
(72) Inventor: WANG, Shuai, Shenzhen, Guangdong 518129 (CN); YU, Anliang, Shenzhen, Guangdong 518129 (CN); WANG, Wei, Shenzhen, Guangdong 518129 (CN); CAI, Zhonghua, Shenzhen, Guangdong 518129 (CN)
(74) Representative: Körber, Martin Hans
(86) International application number: PCT/CN2021/105496
(87) International publication number: WO 2023/279375

(57) **Abstract**

Embodiments of this application disclose a detection control method and an apparatus, which are used for target detection, and may be applied to the fields such as intelligent driving, intelligent transportation, surveying and mapping, and intelligent manufacturing. In embodiments of this application, a control apparatus may control a laser emitting unit and a laser receiving unit to perform two phases of laser detection. A first phase of laser detection is used to determine a time location, and a second phase of laser detection is used for target detection in a time window including a first time location. In one aspect, in the second phase of detection process, the control apparatus controls a laser detection unit to receive an echo signal in a first time window. Because a time for receiving the echo signal is shortened, an amount of data in the detection process is reduced. In another aspect, detection is not performed at a time location that does not belong to the first time window, so that an unrelated signal can be prevented from affecting a detection effect, and signal effectiveness is improved.

## Description

### TECHNICAL FIELD

This application relates to detection technologies, and is applied to the fields such as intelligent driving, intelligent transportation, surveying and mapping, and intelligent manufacturing, and in particular, to a detection control method and an apparatus.

### BACKGROUND

With development of information technologies and computer vision, a detection technology is developed rapidly, and various detection apparatuses bring great convenience to people's life and travel. For example, an advanced driver assistance system (Advanced Driver Assistance System, ADAS) plays a very important role in intelligent vehicles. The ADAS uses a detection apparatus installed on a vehicle to detect an ambient environment, collect data, and identify a still object and a moving object in a driving process of the vehicle, and performs a systemic operation and systemic analysis with reference to map data of a navigator. In this way, a driver perceives a potential danger in advance, to effectively improve driving comfort and safety of the vehicle. The detection apparatus may be considered as an "eye" of an electronic device (for example, a vehicle, a robot, or an uncrewed aerial vehicle) for sensing an environment, and includes a visual sensor like a camera and a radar sensor like a millimeter-wave radar, a lidar, and an ultrasonic radar. The lidar (Lidar) has high resolution, good detection performance, and strong concealment, and is one of important detection apparatuses in sensing.

As a requirement for a sensing result is increasingly high, a multi-channel and high-parallelism requirement for the lidar is also increasingly high. However, a real-time, multi-channel, and high-parallelism lidar imposes high requirements on manufacturability and costs of a chip of the lidar.

How to improve detection performance of the lidar without significantly increasing hardware design complexity and costs is a hot topic that is being studied by a person skilled in the art.

### SUMMARY

Embodiments of this application provide a detection control method and an apparatus, to improve effectiveness of a detection signal, so as to further improve detection performance of a lidar.

According to a first aspect, an embodiment of this application discloses a detection control method, including:
controlling a laser emitting unit to emit a first laser signal;
controlling a laser detection unit to receive a first echo signal including a reflected signal corresponding to the first laser signal;
outputting a first control signal based on the first echo signal, where the first control signal indicates a first time location;
controlling the laser emitting unit to emit a second laser signal; and
controlling, based on the first control signal, the laser detection unit to receive a second echo signal in a first time window, where the second echo signal includes a reflected signal corresponding to the second laser signal, and the second echo signal is used for target detection.

The first time window is related to the first time location and first duration, the first time window includes the first time location, and the first duration is predefined or preconfigured.

The method may be performed by a control apparatus. Optionally, the control apparatus may be a control apparatus in a detection apparatus, or may be a controller (for example, a controller in a vehicle) connected to a detection apparatus. The detection apparatus includes the laser emitting unit and the laser detection unit. For example, the detection apparatus may be a lidar.

In a design, duration for receiving the first echo signal is greater than a length of the first time window.

In this embodiment of this application, a first phase of laser detection is used to determine a time location, and a second phase of laser detection is used for target detection in a time window including the first time location. In one aspect, when performing detection, the current detection apparatus usually receives an echo signal in entire duration of a detection time. Duration of the first time window (namely, the first duration) in the second phase of detection process in this embodiment of this application is usually less than duration of an original detection time (for example, a detection time in the first time of detection process). The laser detection unit receives the echo signal in the first time window, so that a time for receiving the echo signal is shortened, and further detected data obtained based on the echo signal is also reduced. Consequentially, an amount of data that needs to be processed is reduced. In another aspect, a time location for receiving the echo signal in the second phase of detection process is positioned based on the time location and the first duration. In this case, the echo signal may not be received at a time location that does not belong to the first time window, so that an unrelated signal can be prevented from affecting a detection effect, effectiveness of the received echo signal is improved, and detection performance of the lidar is improved.

In a possible scenario, the time location is an interesting time location obtained after the first phase of detection. Therefore, in the second phase of detection process, a detection area corresponding to the time location is specially detected, so that a detection time is shortened, to compress an amount of data in the detection process. This improves effectiveness of a detection signal, and improves the detection performance of the lidar.

With reference to the first aspect, in a possible implementation of the first aspect, the first time location corresponds to a first feature signal. The first feature signal includes at least one of a pulse signal, a peak signal, a rising-edge signal, or the like.

For example, the first time location may be a time location at which the first feature signal is located. The first feature signal may indicate a special waveform feature.

In a possible scenario, the feature signal represents that there may be a target object in the detection area. Therefore, detection may be performed again at the time location at which the feature signal is located, so that a predicted target object can be detected, to improve the effectiveness of the detection signal.

With reference to the first aspect, in another possible implementation of the first aspect, the first feature signal may be obtained based on the first echo signal. For example, an electrical signal may be obtained based on the first echo signal, and the electrical signal may include at least one feature signal. The first feature signal may belong to the at least one feature signal.

With reference to the first aspect, in another possible implementation of the first aspect, the feature signal may be a signal having the special waveform feature. The signal having the special waveform feature may be a signal reflected by the target object, and a time location of the signal returned by the predicted target object is obtained. Therefore, a time window may be obtained, and the predicted target object is detected again in the time window.

With reference to the first aspect, in another possible implementation of the first aspect, the first duration is related to duration of the laser signal. For example, the first duration may indicate a width of the time window. For example, if the duration of the laser signal is 10 milliseconds (ms), the first duration may be set to 10 ms, or may be slightly greater than 10 ms or slightly less than 10 ms. If the echo signal returned by the target object exists at the first time location, because the width of the time window is related to the duration of the laser signal, the echo signal (corresponding to a continuous laser signal) continuously returned by the target object can be received, to improve accuracy of a detection result.

In a design, the control apparatus may control the duration of the laser signal emitted by the laser emitting unit, and the control apparatus may further control the width of the time window for receiving the echo signal by the laser detection unit. The duration of the laser signal is related to (for example, equal to) the width of the time window.

With reference to the first aspect, in another possible implementation of the first aspect, the first control signal further indicates a second time location, and the first time window further includes the second time location.

With reference to the first aspect, in another possible implementation of the first aspect, the first control signal further indicates a second time location; and the controlling, based on the first control signal, the laser detection unit to receive a second echo signal in a first time window includes:
controlling, based on the first control signal, the laser detection unit to receive the second echo signal in the first time window and a second time window, where the second time window is related to the second time location and the first duration, and the second time window includes the second time location.

The foregoing describes a possible design of a control signal. The first control signal may indicate a plurality of time locations. Correspondingly, the laser detection unit may be controlled to perform detection in a plurality of time windows (each time window includes at least one of the plurality of time locations), to improve detection efficiency.

With reference to the first aspect, in another possible implementation of the first aspect, the first control signal further indicates a third time location, and the method further includes:
controlling the laser emitting unit to emit a third laser signal; and
controlling, based on the first control signal, the laser detection unit to receive a third echo signal in a third time window, where the third echo signal includes a reflected signal corresponding to the third laser signal, the third echo signal is used for target detection, the third time window is related to the third time location and the first duration, and the third time window includes the third time location.

The foregoing describes another possible design of a control signal. The first control signal may indicate a plurality of time locations. The detection apparatus may perform a plurality of times of laser emission and a plurality of times of detection. In each laser emission and detection process, the detection unit is controlled to receive the echo signal in one or more time windows. Through the plurality of times of detection, an amount of data that needs to be processed after each time of detection can be reduced, and a data processing speed of a data processing module can be adapted to. Further, through the plurality of times of detection, in each detection process, a time for receiving an echo signal by a detector is short, so that detection accuracy can be improved, mutual interference between echo signals can be avoided, and the accuracy of the detection result can be improved.

With reference to the first aspect, in another possible implementation of the first aspect, the method further includes:
outputting a fifth control signal based on the first echo signal, where the fifth control signal indicates a fifth time location;
controlling the laser emitting unit to emit a fourth laser signal; and
controlling, based on a second control signal, the laser detection unit to receive a fourth echo signal in a fourth time window, where the fourth echo signal includes a reflected signal corresponding to the fourth laser signal, the fourth echo signal is used for target detection, the fourth time window is related to the fifth time location and the first duration, and the fourth time window includes the fifth time location.

The foregoing describes another possible design of a control signal. A plurality of control signals may be output by using the first echo signal. The plurality of control signals may indicate a plurality of time locations. The detection apparatus may perform a plurality of times of laser emission and a plurality of times of detection based on the plurality of control signals. In each laser emission and detection process, the detection unit is controlled to receive the echo signal in one or more time windows (each time window includes at least one of the plurality of time locations). Through the plurality of times of detection, an amount of data that needs to be processed after each time of detection can be reduced, and a data processing speed of a data processing module can be adapted to. Further, through the plurality of times of detection, in each detection process, a time for receiving an echo signal by the detector is short, so that detection accuracy can be improved, mutual interference between echo signals can be avoided, and the accuracy of the detection result can be improved.

With reference to the first aspect, in another possible implementation of the first aspect, the laser detection unit includes at least one detection element. The detection element may obtain an electrical signal based on an optical signal. Optionally, the detection element may be one of a semiconductor avalanche photodiode (avalanche photo detector, APD), a single-photon avalanche diode (single-photon avalanche diode, SPAD), an electron multiplying charge-coupled device (electron multiplying charge-coupled device, EMCCD), or the like.

With reference to the first aspect, in another possible implementation of the first aspect, the laser detection unit includes at least one single-photon detection element. The single-photon detection element has sensitivity of detection a single photon, and may also respond to a weak optical signal (for example, a single photon), to obtain an electrical signal.

For example, the single-photon detection element may be an APD, an SPAD, or the like.

When the detection element of the laser detection unit is sensitive, a very weak optical signal from the detection area also makes the detection element saturated. However, the saturated detection element needs a specific time to restore a status, and cannot perform detection within a recovery time (or referred to as deadtime (deadtime)). If an optical signal of the target object reaches the detector within the recovery time, the optical signal may not be detected by the detection element. As a result, a true echo signal is submerged by a previous interference signal, and missed detection occurs on the signal. However, in this embodiment of this application, in the second phase of detection process, the detection element performs detection in the time window, so that a case in which the echo signal of the target object is submerged by the previous interference signal can be avoided or reduced, to improve the accuracy of the detection result.

With reference to the first aspect, in another possible implementation of the first aspect, the laser detection unit may be in an array form, for example, an array of a specification like a 1×2 array, a 2x3 array, or a 3×3 array. This is not limited in this application.

The laser detection unit in the array form may increase a detection field of view. In some possible designs, the laser detection unit in the array form may obtain pixel information of the detection area.

With reference to the first aspect, in another possible implementation of the first aspect, the laser detection unit includes a plurality of detection elements, and one detection element corresponds to an output signal of one pixel.

The first feature signal includes a signal obtained by performing superposition processing on output signals of adjacent pixels, and the adjacent pixels correspond to at least two adjacent detection elements in the laser detection unit.

The foregoing describes a process of obtaining the first feature signal. In a subsequent detection process, detection may be performed on a time location at which the feature signal is located, and detection is not performed on a location at which no feature signal exists. To avoid missed detection of a signal, output signals may be superposed, so that the feature signal is more obvious.

With reference to the first aspect, in another possible implementation of the first aspect, the method is applied to a laser detection apparatus.

A start time of the first time window is after a fourth time location or is the same as a fourth time location; and the fourth time location corresponds to a distance from the laser emitting unit to a first optical element, and the first optical element is an outermost optical element that belongs to the laser detection apparatus and that is in an emitting optical path of the second laser signal.

The foregoing describes a design of a time window. One or more optical elements, such as a lens, a diffuser, and a window, are usually disposed in the laser detection apparatus. The optical element reflects an optical signal. When the detection element is sensitive, an optical signal returned by an optical element of the laser detection apparatus may cause saturation of the detection element, and consequently, the echo signal is submerged. In the foregoing design, detection is performed after an optical signal returned by an outermost optical element reaches the detection element, so that the true echo signal can be prevented from being submerged. This reduces an amount of data, avoids missed detection of a signal, and improves the signal effectiveness and the accuracy of the detection result.

With reference to the first aspect, in another possible implementation of the first aspect, the outputting a first control signal based on the first echo signal includes:
obtaining, based on the first echo signal, a to-be-detected signal by using the laser detection unit;
obtaining the first time location based on the to-be-detected signal; and
outputting the first control signal, where the first control signal is used to control the laser emitting unit and/or the laser detection unit.

The foregoing describes a design for determining a time location. The laser detection unit may receive the first echo signal, and obtain the electrical signal (namely, the to-be-detected signal) based on the first echo signal. A signal detection module may detect the to-be-detected signal, to determine the first time location.

With reference to the first aspect, in another possible implementation of the first aspect, the method further includes:
obtaining a detection result of a detection area based on the second echo signal. The detection result may be point cloud information, or the point cloud information may be obtained by processing the detection result. The point cloud information may include one or more pieces of information such as a distance, a speed, a reflectivity, a reflection intensity, an image, and a pixel of the detection area.

With reference to the first aspect, in another possible implementation of the first aspect, the controlling a laser emitting unit to emit a first laser signal includes:
outputting the second control signal; and
controlling, based on the second control signal, the laser emitting unit to emit the first laser signal.

With reference to the first aspect, in another possible implementation of the first aspect, the controlling the laser emitting unit to emit a second laser signal includes:
outputting a third control signal; and
controlling, based on the third control signal, the laser emitting unit to emit the second laser signal.

With reference to the first aspect, in another possible implementation of the first aspect, the controlling a laser detection unit to receive a first echo signal including a reflected signal corresponding to the first laser signal includes:
outputting a fourth control signal; and
controlling, based on the fourth control signal, the laser detection unit to emit the second laser signal.

According to a second aspect, an embodiment of this application discloses a detection apparatus. The detection apparatus includes a laser emitting unit, a laser detection unit, and at least one processing unit.

The at least one processing unit is configured to control the laser emitting unit to emit a first laser signal, and is configured to control the laser detection unit to receive a first echo signal including a reflected signal corresponding to the first laser signal.

The at least one processing unit is further configured to output a first control signal based on the first echo signal, where the first control signal indicates a first time location.

The at least one processing unit is further configured to control the laser emitting unit to emit a second laser signal.

The at least one processing unit is further configured to control, based on the first control signal, the laser detection unit to receive a second echo signal in a first time window. The second echo signal includes a reflected signal corresponding to the second laser signal, and the second echo signal is used for target detection.

The first time window is related to the first time location and first duration, the first time window includes the first time location, and the first duration is predefined or preconfigured.

The at least one processing unit includes at least one integrated circuit and/or at least one digital signal processor.

In a possible implementation of the second aspect, the first time location corresponds to a first feature signal, the first feature signal is obtained based on the first echo signal, and the first feature signal includes at least one of a pulse signal, a peak signal, a rising-edge signal, or the like.

In another possible implementation of the second aspect, the first control signal further indicates a second time location, and the first time window further includes the second time location.

In another possible implementation of the second aspect, the first control signal further indicates a second time location, and the at least one processing unit is further configured to:
control, based on the first control signal, the laser detection unit to receive the second echo signal in the first time window and a second time window, where the second time window is related to the second time location and the first duration, and the second time window includes the second time location.

In another possible implementation of the second aspect, the first control signal further indicates a third time location.

The at least one processing unit is further configured to control the laser emitting unit to emit a third laser signal.

The at least one processing unit is further configured to control, based on the first control signal, the laser detection unit to receive a third echo signal in a third time window, where the third echo signal includes a reflected signal corresponding to the third laser signal, the third echo signal is used for target detection, the third time window is related to the third time location and the first duration, and the third time window includes the third time location.

In another possible implementation of the second aspect, the laser detection unit includes at least one single-photon detection element.

In another possible implementation of the second aspect, the laser detection unit includes a plurality of detection elements, and one detection element corresponds to an output signal of one pixel.

The first feature signal includes a signal obtained by performing superposition processing on output signals of adjacent pixels, and the adjacent pixels correspond to at least two adjacent detection elements in the laser detection unit.

In another possible implementation of the second aspect, the detection apparatus includes at least one optical element.

A start time of the first detection time window is after a fourth time location or is the same as a fourth time location; and the fourth time location corresponds to a distance of the second laser signal from the laser emitting unit to a first optical element in the at least one optical element, and the first optical element is an outermost optical element that belongs to the detection apparatus and that is in an emitting optical path of the second laser signal.

In another possible implementation of the second aspect, the laser detection unit is further configured to obtain a to-be-detected signal based on the first echo signal.

The at least one processing unit is configured to:
obtain the first time location based on the to-be-detected signal; and
output the first control signal, where the first control signal is used to control the laser emitting unit and/or the laser detection unit.

In another possible implementation of the second aspect, the at least one processing unit is further configured to obtain a detection result of a detection area based on the second echo signal.

According to a third aspect, an embodiment of this application discloses a processing apparatus. The processing apparatus includes at least one processor and a communication interface. The communication interface is configured to provide instructions or a data input and/or output for the processor, and the at least one processor is configured to implement the method described in any one of the first aspect or the possible implementations of the first aspect.

In a possible implementation of the third aspect, the at least one processor is configured to perform the following operations:
controlling a laser emitter to emit a first laser signal;
controlling a detector to receive a first echo signal including a reflected signal corresponding to the first laser signal;
outputting a first control signal based on the first echo signal, where the first control signal indicates a first time location;
controlling the laser emitter to emit a second laser signal; and
controlling, based on the first control signal, the detector to receive a second echo signal in a first time window, where the second echo signal includes a reflected signal corresponding to the second laser signal, and the second echo signal is used for target detection.

The first time window is related to the first time location and first duration, the first time window includes the first time location, and the first duration is predefined or preconfigured.

In another possible implementation of the third aspect, the first time location corresponds to a first feature signal, the first feature signal is obtained based on the first echo signal, and the first feature signal includes at least one of a pulse signal, a peak signal, a rising-edge signal, or the like.

In another possible implementation of the third aspect, the first control signal further indicates a second time location, and the first time window further includes the second time location.

In another possible implementation of the third aspect, the first control signal further indicates a second time location, and the at least one processor is further configured to:
control, based on the first control signal, the detector to receive the second echo signal in the first time window and a second time window, where the second time window is related to the second time location and the first duration, and the second time window includes the second time location.

In another possible implementation of the third aspect, the first control signal further indicates a third time location, and the at least one processor is further configured to:
control the laser emitter to emit a third laser signal; and
control, based on the first control signal, the detector to receive a third echo signal in a third time window, where the third echo signal includes a reflected signal corresponding to the third laser signal, the third echo signal is used for target detection, the third time window is related to the third time location and the first duration, and the third time window includes the third time location.

In another possible implementation of the third aspect, the processing apparatus includes the detector, and the detector includes at least one single-photon detection element.

In another possible implementation of the third aspect, the processing apparatus further includes the detector, where the detector includes a plurality of detection elements, and one detection element corresponds to an output signal of one pixel.

The first feature signal includes a signal obtained by performing superposition processing on output signals of adjacent pixels, and the adjacent pixels correspond to at least two adjacent detection elements in the detector.

In another possible implementation of the third aspect, the processing apparatus further includes the laser emitter and at least one optical element.

A start time of the first detection time window is after a fourth time location or is the same as a fourth time location; and the fourth time location corresponds to a distance of the second laser signal from the laser emitter to a first optical element in the at least one optical element, and the first optical element is an outermost optical element that belongs to the processing apparatus and that is in an emitting optical path of the second laser signal.

In another possible implementation of the third aspect, the processing apparatus further includes the detector, and the detector is further configured to obtain a to-be-detected signal based on the first echo signal.

The at least one processor is further configured to:
obtain the first time location based on the to-be-detected signal; and
output the first control signal, where the first control signal is used to control the laser emitting unit and/or the laser detection unit.

In another possible implementation of the third aspect, the at least one processor is further configured to obtain a detection result of a detection area based on the second echo signal.

It should be noted that the at least one processor in the third aspect may be a processor (referred to as a dedicated processor for ease of differentiation) that is specially configured to perform these methods, or may be a processor that performs these methods by invoking a computer program, for example, a general-purpose processor. Optionally, the at least one processor may further include both the dedicated processor and the general-purpose processor.

Optionally, the computer program may be stored in a memory, and the memory may be a non-transitory (non-transitory) memory, for example, a read-only memory (Read-Only Memory, ROM). When a detection apparatus includes the memory, the memory and the processor may be integrated into a same chip, or may be disposed on different chips. A type of the memory and a manner in which the memory and the processor are disposed are not limited in embodiments of this application.

In a possible implementation, the at least one memory is located outside the detection apparatus.

In another possible implementation, the at least one memory is located inside the detection apparatus.

In another possible implementation, a part of the at least one memory is located inside the detection apparatus, and the other part of the memory is located outside the detection apparatus.

According to a fourth aspect, an embodiment of this application discloses a terminal. The terminal is configured to implement the method described in any one of the first aspect or the possible implementations of the first aspect.

Optionally, the terminal may be a terminal like a fusion detection apparatus, a vehicle, an uncrewed aerial vehicle, or a robot.

According to a fifth aspect, an embodiment of this application discloses a terminal. The terminal includes the detection apparatus described in any implementation of the second aspect, and/or the terminal includes the processing apparatus described in any implementation of the third aspect.

Optionally, the terminal may be a terminal like a fusion detection apparatus, a vehicle, an uncrewed aerial vehicle, or a robot.

According to a sixth aspect, an embodiment of this application further provides a chip system. The chip system includes at least one processor and a communication interface. The communication interface is configured to send and/or receive data, and/or the communication interface is configured to provide an input/output for the at least one processor.

The at least one processor is configured to invoke a computer program, to enable the chip system to implement the method described in any one of the first aspect or the possible implementations of the first aspect.

According to a seventh aspect, an embodiment of this application discloses a computer-readable storage medium. The computer-readable storage medium stores a computer program. When the computer program is run on one or more processors, the method described in any one of the first aspect or the possible implementations of the first aspect is implemented.

According to an eighth aspect, an embodiment of this application discloses a computer program product. When the computer program product runs on one or more processors, the method described in any one of the first aspect or the possible implementations of the first aspect is implemented.

It should be noted that some possible implementations of the second aspect to the eighth aspect of this application have a same concept as some implementations of the first aspect. For beneficial effects brought by the possible implementations of the second aspect to the eighth aspect, refer to the beneficial effects of the first aspect. Therefore, details are not described again.

### BRIEF DESCRIPTION OF DRAWINGS

The following describes the accompanying drawings used in embodiments of this application.
FIG. 1 is a schematic diagram of a time location according to an embodiment of this application;
FIG. 2 is a schematic diagram of a structure of a detection apparatus according to an embodiment of this application;
FIG. 3 is a schematic diagram of a gate circuit according to an embodiment of this application;
FIG. 4 is a schematic diagram of a structure of another detection apparatus according to an embodiment of this application;
FIG. 5 is a schematic diagram of a structure of a lidar according to an embodiment of this application;
FIG. 6 is a schematic flowchart of a detection control method according to an embodiment of this application;
FIG. 7 is a schematic diagram of a statistical histogram according to an embodiment of this application;
FIG. 8 is a schematic diagram of an output of a laser detection unit according to an embodiment of this application;
FIG. 9 is a schematic diagram of an output of another laser detection unit according to an embodiment of this application;
FIG. 10 is a schematic diagram of superposing signals according to an embodiment of this application;
FIG. 11 is a schematic diagram of a time window according to an embodiment of this application;
FIG. 12 is a schematic diagram of gating according to an embodiment of this application;
FIG. 13 is another schematic diagram of gating according to an embodiment of this application;
FIG. 14 is another schematic diagram of gating according to an embodiment of this application;
FIG. 15 is a schematic diagram of a structure of a detection apparatus according to an embodiment of this application;
FIG. 16 is a schematic diagram of a time sequence used when a detection apparatus works according to an embodiment of this application;
FIG. 17 is a diagram of a time sequence of another signal according to an embodiment of this application;
FIG. 18 is a schematic diagram of a structure of a detection apparatus according to an embodiment of this application; and
FIG. 19 is a schematic diagram of a structure of a processing apparatus according to an embodiment of this application.

### DESCRIPTION OF EMBODIMENTS

The following describes embodiments of this application with reference to the accompanying drawings in embodiments of this application.

For ease of understanding, the following first explains some terms in embodiments of this application.

### 1. Detection apparatus

The detection apparatus mentioned in embodiments of this application may be a lidar (or a component inside a lidar, for example, a chip, an integrated circuit, or a software module), or may be another optical detection apparatus (or a component inside an optical detection apparatus, for example, a chip, an integrated circuit, or a software module), for example, a fusion detection apparatus. A working principle of the detection apparatus is detection a corresponding target object by emitting an optical signal and receiving an optical signal returned by the target object.

The detection apparatus in embodiments of this application can be applied to various fields such as intelligent driving, intelligent transportation, intelligent manufacturing, environment monitoring, surveying and mapping, and uncrewed aerial vehicle, and can complete one or more functions of target detection, distance measurement, speed measurement, target tracking, imaging recognition, and the like.

The detection apparatus in embodiments of this application can be applied to a vehicle-mounted detection apparatus (for example, a vehicle-mounted radar), a roadside detection apparatus (for example, an intersection radar), or the like, but can also be applied to another detection apparatus, for example, a detection apparatus installed on an apparatus like an uncrewed aerial vehicle, a robot, a railcar, a bicycle, a signal light, a speed measurement apparatus, or a base station. An installation location of the detection apparatus is not limited in this application.

### 2. Echo signal

In embodiments of this application, an optical signal received by a detector of a detection apparatus is referred to as an echo signal. The echo signal may include a reflected signal of a signal emitted by the detection apparatus, and may further include a related optical signal of an ambient light source (for example, may be an optical signal directly from the ambient light source, or may be a reflected signal obtained by reflecting an optical signal of the ambient light source). The ambient light source may include one or more of a natural light source (for example, the sun), an artificial light source (for example, a street lamp or a vehicle lamp), and the like.

### 3. Time of flight

The time of flight (Time of Flight, ToF) is duration in which a laser emitter sends a light pulse to a target object and then a detector receives light reflected from the target. A distance between the target object and a detection apparatus can be obtained based on a speed of light and the ToF. A ToF measurement technology may include a single laser pulse technology, a multi-laser pulse technology, and the like. In the single laser pulse technology, the measured time of flight is duration of returning a single pulse, and a high requirement is on a signal-to-noise ratio (signal-to-noise ratio, SNR, or referred to as S/N). In the multi-laser pulse technology, duration of returning a plurality of pulses are measured each time, and detected data is obtained based on histogram data. The multi-laser pulse technology can obtain good detection results under different SNRs. If the SNR is improved, long-distance detection can be implemented.

### 4. Statistical histogram

A laser signal emitted by a detection apparatus covers an entire field of view area (namely, a detection area of the detection apparatus), and the laser signal generates diffuse reflection on a target object in the field of view area. As a result, energy of a laser signal returned from the field of view area is reduced. In this case, ambient light (such as the sunshine, street lamp light, or a laser signal of another detection apparatus) is considered as noise, and may interfere with detection performed by the detector on the signal. In this case, because strength of the signal received by the detector is weak, the received laser signal may not correspond to the emitted laser signal, and consequently, a large error occurs when a flight signal is calculated. Therefore, a high-sensitivity optical detector is required in a detection process to detect a weak optical signal.

A single-photon detection element (or referred to as a single-photon detector) has sensitivity of detection a single photon, and may be used to detect a weak optical signal. Further, time precision at a picosecond level may be achieved by using a time-correlated single-photon counting (Time-Correlated Single-Photon Counting, TCSPC) technology. Specifically, in optical signals returned from the field of view area, a photon first captured by the single-photon detection element may trigger the single-photon detection element, to generate an electrical signal. A time-to-digital converter (Time-to-Digital Converter, TDC) can convert a delay of the electrical signal relative to an emitting time point.

However, the single-photon detection element captures a photon that arrives at a specific moment in a segment of emitted laser signal, which is random. Therefore, the detection apparatus may repeatedly emit and detect a same laser signal for many times, to obtain statistical distribution of delays of electrical signals detected each time relative to the emitted signals, so as to obtain the statistical histogram. This statistical histogram restores a change of energy of the emitted signal over time, so that the time of flight of coming and returning of the pulse is obtained.

Generally, a vertical coordinate of the statistical histogram is the number of counts (number of counts), and a horizontal coordinate is the time (time, time bin, time window, or time line).

### 5. Time location

The time location mentioned in this application is a relative location of a signal in time domain. Optionally, the time location may be indicated by using at least one of a moment, a periodicity, an offset, duration, a timer (timer), a time difference, or the like.

The time of flight corresponds to a distance between the target object and the detection apparatus. Therefore, when the detection apparatus emits a plurality of segments of laser signals to the target object, an echo signal from the target object fixedly falls to a specific time location.

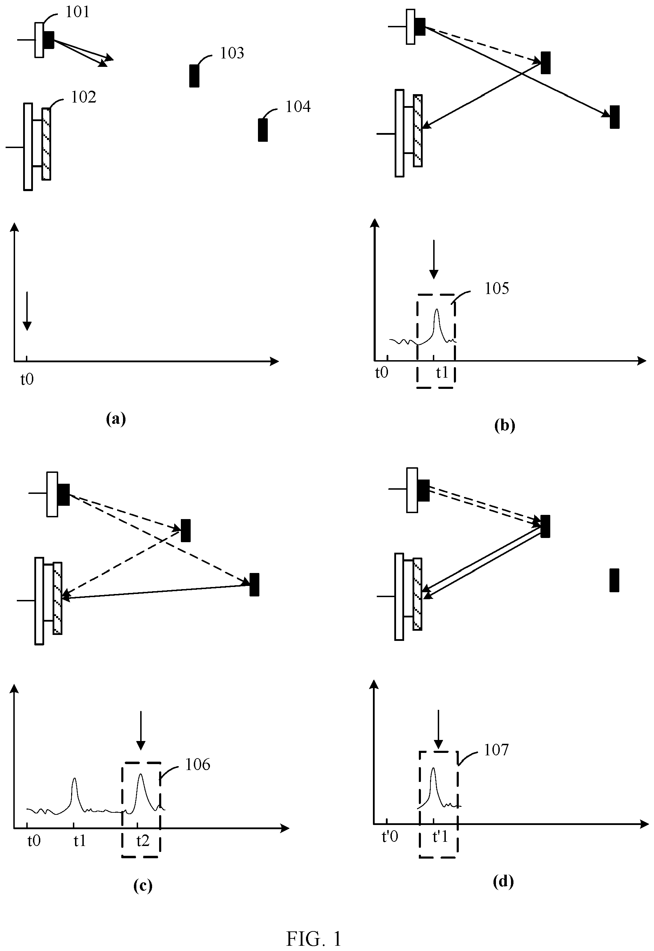

For example, FIG. 1 is a schematic diagram of a possible time location according to an embodiment of this application. A laser emitter 101 is configured to emit an optical signal, and a detector 102 is configured to receive an optical signal. As shown in (a) in FIG. 1, the laser emitter 101 may emit an optical signal at a moment to. As shown in (b) in FIG. 1, a target object 103 may reflect a laser signal, and a reflected signal arrives at the detector 102 at a moment t1, as shown in an area 105. Similarly, as shown in (c) in FIG. 1, a target object 104 may reflect a laser signal, and a reflected signal arrives at the detector 102 at a moment t2, as shown in an area 106. It can be learned that, because a distance between the target object 103 and the detection apparatus and a distance between the target object 104 and the detection apparatus are different, time of flight of the laser signals is different, so that a time location corresponding to the laser signal returned by the target object 103 and a time location corresponding to the laser signal returned by the target object 104 are also different.

As shown in (d) in FIG. 1, it should be understood that, if the detection apparatus emits a laser signal at a moment t'0 (relative to t0) in next detection, an optical signal returned by the target object 103 may be received at a location at a moment t'1 (relative to t01), as shown in an area 107. A time difference between t'0 and t'1 is related to a time difference between t0 and t1, for example, the two are equal when relative locations of the detection apparatus and the target object 103 remain unchanged.

### 6. Unit

Terms such as "unit", "module", "component", and "system" used in this application may indicate computer-related entities, hardware, firmware, combinations of hardware and software, software, or software being executed. For example, the unit may include but is not limited to hardware (for example, one or more of a laser emitter entity, a detection component entity, a processor entity, a circuit entity, and a chip entity), software (for example, one or more of a process that can run on a processor, an executable file, computer instructions, and a computer program), or a combination of hardware and software (for example, a storage medium storing a computer program or a processor that executes computer instructions). For example, a laser emitting unit may include a laser emitter entity, and optionally, may further include one or more of a collimation apparatus, a laser emitting program, a laser emitting instruction, a chip or a processor that executes the laser emitting program, and a memory.

For example, a laser detection unit may include a laser detector, and optionally, may further include one or more of a detection program, a detection instruction, a chip, or a memory.

Descriptions of the foregoing related concepts may be applied to the following embodiments.

With development of information technologies and computer vision, a detection technology is developed rapidly, and various detection apparatuses bring great convenience to people's life and travel. For example, an advanced driver assistance system (Advanced Driver Assistance System, ADAS) plays a very important role in intelligent vehicles. The ADAS uses a detection apparatus installed on a vehicle to detect an ambient environment, collect data, and identify a still object and a moving object in a driving process of the vehicle, and performs a systemic operation and systemic analysis with reference to map data of a navigator. In this way, a driver perceives a potential danger in advance, to effectively improve driving comfort and safety of the vehicle.

The detection apparatus may be considered as an "eye" of an electronic device for sensing an environment, and includes a visual sensor like a camera and a radar sensor like a millimeter-wave radar, a lidar, and an ultrasonic radar. The lidar has high resolution, good detection performance, and strong concealment, and is one of important sensors in vehicle sensing.

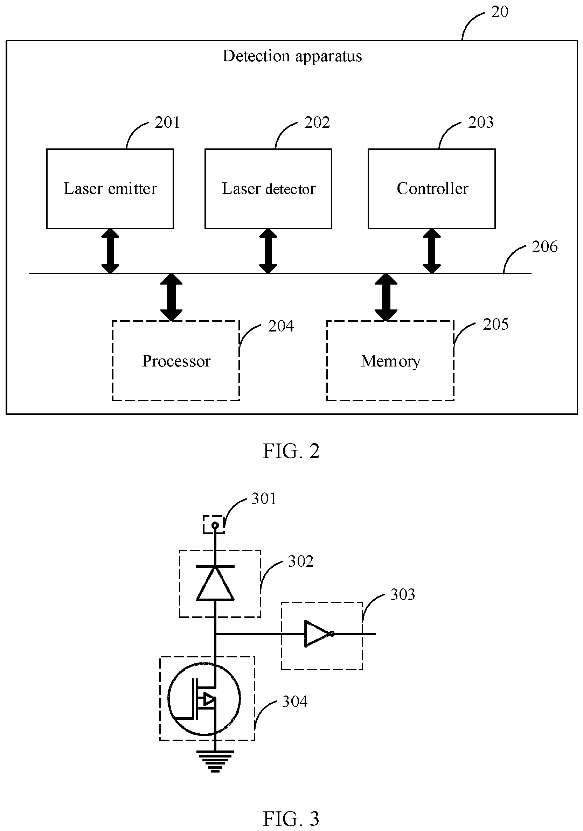

FIG. 2 is a schematic diagram of a structure of a detection apparatus 20 according to an embodiment of this application.

The detection apparatus 20 shown in FIG. 2 includes a laser emitter 201, a laser detector 202, and a controller 203. Optionally, the apparatus may further include a processor 204 and/or a memory 205. Further, the laser emitter 201, the laser detector 202, the controller 203, and the like may be connected by using a bus 206 or in another possible connection manner. Optionally, the detection apparatus 20 may further include a communication interface (not shown in the figure). The communication interface is configured to provide an input and/or output for each component, and/or the communication interface is configured to receive and/or send data. The communication interface may be a wireless communication interface or a wired communication interface. All the units are described in detail as follows.
(1) The laser emitter 201 is configured to generate a laser signal. The laser emitter 201 may include a light emitting component like a laser diode (laser diode, LD), a vertical cavity surface emitting laser (Vertical Cavity Surface Emitting Laser, VCSEL), a distributed feedback laser diode (distributed feedback LD, DFB-LD), a distributed bragg reflection laser diode (distributed bragg reflection LD, DBR-LD), a grating coupled sampling reflection laser diode (Grating coupled sampling reflection LD, GCSR-LD), or a micro-opto-electro-mechanical system laser diode (micro-opto-electro-mechanical system LD, MOEMS-LD).
(2) The laser detector 202 is configured to: receive an optical signal, and further obtain an electrical signal based on the optical signal. Optionally, the laser detector 202 may include at least one of detection elements such as a semiconductor avalanche photodiode (avalanche photo detector, APD), a single-photon avalanche diode (single-photon avalanche diode, SPAD), or an electron multiplying charge-coupled device (electron multiplying charge-coupled device, EMCCD). Optionally, the detection elements in the detector may be arranged in an array, for example, may be an array of a specification like a 1×2 array, a 2×3 array, or a 3×3 array. This is not limited in this application.

The laser detector 202 in this embodiment of this application may be controlled to be turned on or turned off. In a design, the detector may be controlled by using a gate circuit. For example, FIG. 3 is a schematic diagram of a gate circuit according to an embodiment of this application. An area 301 shown in FIG. 3 is a voltage input of the gate circuit. Optionally, when the voltage input is at a high level, the detection element shown in an area 302 is in an on state (namely, a working state), and may receive an optical signal and convert the optical signal into an electrical signal. When the voltage input is at a low level, the detection element is in an off state. When the detection element works, the electrical signal obtained through conversion may be read by using a read circuit shown in an area 303. Optionally, the read circuit may include a phase inverter, or referred to as a comparator, and the phase inverter may be configured to read the electrical signal. Optionally, the gate circuit may include a field effect transistor shown in an area 304, and the field effect transistor is configured to adjust the gate circuit. It can be learned that, a power supply voltage of the detection element may be adjusted by using the gate circuit shown in FIG. 3, to control whether the detector is in an on state or an off state.

In a possible design, the laser detector 202 may have different working modes. For example, the detector may have at least two working modes: a free running mode and a gate mode. In the free running mode, the laser detector 202 may be always in the on state, or always in the off state, or in an adaptively adjusted on or off state. In the gate mode, the laser detector 202 may be controlled by another apparatus or module to be in the on or off state.

(3) The controller 203 is configured to control all or some components in the detection apparatus 20. For example, the controller 203 is configured to control the laser emitter 201 and the laser detector 202 in the detection apparatus 20.

It should be understood that the controller 203 may include a plurality of sub-control units. For example, the controller 203 may include two sub-control units, one sub-control unit is configured to control the laser emitter, and the other sub-control unit is configured to control the detector. A person skilled in the art may learn that the plurality of sub-control units may be independent of each other in hardware, may be an integrated structure, or may be a plurality of logical functions implemented in software. This is not specifically limited in this application.

In a design, the controller 203 may generate a control signal and send the control signal to one or more components in the detection apparatus 20, to control the one or more components. For example, the controller 203 may send an emitting control signal to the laser emitter 201, and the laser emitter 201 responds to the emitting control signal, to emit a laser signal to the outside. For another example, the controller 203 may alternatively send a detection control signal to the laser detector 202, and the signal is used to control the laser detector 202 to receive an optical signal and convert the optical signal into an electrical signal.

Alternatively, the controller 203 may be connected to an external controller (or an external processor). For example, the detection apparatus 20 is a vehicle-mounted radar. The controller 203 in the detection apparatus 20 may be connected to a multi domain controller (Multi Domain Controller, MDC) in a vehicle or another possible in-vehicle controller. The in-vehicle controller may send instructions to the controller 203, and the controller 203 generates a control signal based on the instructions.

Optionally, the controller 203 may include hardware, software, or a combination of hardware and software. For example, the controller 203 may be implemented by using one or more of a chip, a circuit (or an integrated circuit), a processor, a computer program, and computer instructions.

(4) The processor 204 is configured to process data (for example, an electrical signal) output by the detector, to obtain detected data. For example, the detected data may be one or more of a TOF value, point cloud information, a statistical histogram, or the like.

Further, the processor 204 may further obtain a detection result of a detection area based on the data output by the detector.

In a possible design, the processor 204 may include one or more of a signal detection module (for example, one or more of a peak detector and the like), a time to digital converter (Time to digital converter, TDC), a filter, and a time of flight (Time of flight, ToF) extraction (extraction) module in the detection apparatus. The filter may further include one or more of a finite impulse response (Finite Impulse Response, FIR) filter, an infinite impulse response (Infinite Impulse Response) filter, and the like.

It should be understood that the foregoing one or more modules may be implemented by using hardware (for example, a processor, a chip, or a circuit), software (for example, a computer program, computer instructions, or an executable file), or a combination of hardware and software. For example, the signal detection module may include hardware (for example, a processor, a chip, or a circuit), software (for example, a computer program, computer instructions, or an executable file), or a combination of hardware and software. For another example, the TDC is usually configured to calculate the time of flight, and is generally a circuit, but may alternatively be implemented by using software or a combination of software and hardware. Other details are not described one by one.

Optionally, when the foregoing module is in a form of hardware, a plurality of pieces of hardware may be independent or integrated. For example, when the signal detection module is a circuit entity and the TDC is a circuit entity, the signal detection module and the TDC may be independent of each other in hardware, or may be an integrated structure.

Alternatively, when the module is software, there are one or more hardware apparatuses that execute the software to implement functions. For example, the signal detection module and the TDC may be implemented by using computer instructions. Further, both the computer instructions used to implement the signal detection module and the computer instructions used to implement the TDC may be invoked by the processor 204, to implement corresponding functions.

It should be noted that, when the detection apparatus 20 includes the controller 203 and the processor 204, the processor 204 and the controller 203 may be integrated or independent.

(5) The memory 205 is configured to provide storage space. For example, the memory 205 may be configured to store one or more of the data (for example, the electrical signal) output by the detector, the detected data, and the computer program.

Optionally, the memory 205 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

(6) Optionally, the detection apparatus 20 may further include a communication interface (not shown in the figure). The communication interface is configured to provide an input and/or output for each component, and/or the communication interface is configured to receive and/or send data.

For example, the communication interface may output, to the processor, the electrical signal obtained by the detector.

For another example, the communication interface may output, to an external apparatus, the data (for example, the electrical signal) output by the detector, or the detected data obtained by the processor.

It should be understood that the detection apparatus 20 may further include one or more of optical elements such as a collimation apparatus, a lens, a window, and an optical splitting apparatus.

When the detection apparatus 20 performs detection, the controller 203 may control the laser emitter 201 to emit a laser signal to the detection area. The detection area reflects an optical signal, and the reflected optical signal is received by the laser detector 202. The laser detector 202 generally includes a plurality of detection elements. Therefore, in a detection process (a laser unit emits a segment of laser signal and receives a reflected signal of the laser signal), the plurality of detection elements of the laser detector 202 output detected data of a plurality of channels. However, as a requirement for a detection result is increasingly high, for example, a requirement for detection precision and resolution is increasingly high, a multi-channel and high-parallelism requirement is increasingly high. Correspondingly, an increasing amount of data that needs to be processed by the detection apparatus also poses a great challenge to a computing capability, manufacturability, and costs of a chip.

In view of this, in this embodiment of this application, two phases of detection processes are included when a target detection area is detected. In a first phase of detection process, the controller 203 may control the laser emitter 201 to emit a laser signal (referred to as a first laser signal for ease of differentiation) to the detection area, and the laser detector 202 receives an echo signal (referred to as a first echo signal for ease of differentiation). The first echo signal includes a reflected signal corresponding to the first laser signal. The first echo signal may be used to determine one or more time locations (referred to as a first time location for ease of description). The first time location corresponds to a first feature signal. In a second phase of detection process, the controller 203 may control the laser emitter 201 to emit a laser signal (which is referred to as a second laser signal for ease of differentiation), and the controller 203 may control the laser detector 202 to receive an echo signal (which is referred to as a second echo signal for ease of differentiation) in a time window. The second echo signal includes a reflected signal of the second laser signal. The time window includes the first time location.

In this embodiment of this application, the first phase of laser detection is used to determine the first time location, and the second phase of laser detection is used for target detection in the time window including the first time location. In one aspect, duration of the first time window (namely, first duration) in the second phase of detection process is usually less than duration of an original detection time (for example, a detection time in the first time of detection process). The laser detection unit receives the echo signal in the first time window, so that a time for receiving the echo signal is shortened, and further detected data obtained based on the echo signal is also reduced. Consequentially, an amount of data that needs to be processed is reduced. In another aspect, a time location for receiving the echo signal in the second phase of detection process is positioned based on the time location and the first duration. In this case, the echo signal may not be received at a time location that does not belong to the first time window, so that an unrelated signal can be prevented from affecting a detection effect, effectiveness of the received echo signal is improved, and detection performance of a lidar is improved.

In a possible design, the detection element of the laser detection unit is sensitive, and a very weak optical signal from the detection area also makes the detection element saturated. However, the saturated detection element needs a specific time to restore a status, and cannot perform detection within a recovery time (or referred to as deadtime (deadtime)). If an optical signal returned by a target object in the detection area reaches the detector within the recovery time, the optical signal may not be detected by the detection element. As a result, a true echo signal is submerged by a previous interference signal, and missed detection occurs on the signal. However, in this embodiment of this application, in the second phase of detection process, the detection element performs detection in the time window, so that a case in which the echo signal of the target object is submerged by the previous interference signal can be avoided or reduced, to improve accuracy of the detection result.

It should be understood that division of the plurality of modules shown in FIG. 2 is merely logical division performed based on functions, and is not used as a limitation on a specific structure of the detection apparatus. In a specific implementation, some modules may be subdivided into more small function modules, and some function modules may alternatively be combined into one function module.

The following describes a possible implementation form of a detection apparatus by using an example in which a detector is an array detector, a controller is a gate bias controller, and a processor is a signal detection module and a TDC.

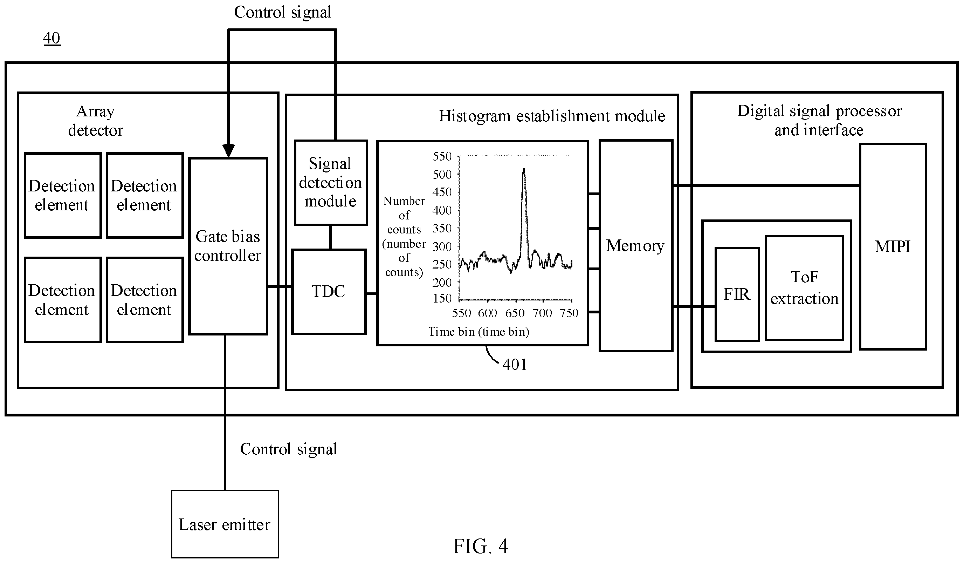

FIG. 4 is a schematic diagram of a possible detection apparatus 40 according to an embodiment of this application. The detection apparatus 40 includes an array detector (for example, an SPAD array (SPAD array)), a gate bias controller (gate bias control), a signal detection module, a TDC, a memory (optional), a filter (optional), and an extraction module (optional).

The gate bias controller may be integrated into the array detector. The gate bias controller may be considered as the controller 203 shown in FIG. 2 or a sub-control unit in the controller 203. The signal detection module is configured to perform feature detection (for example, detect a peak value, a second impulse, or a rising edge in a segment of signal) on an echo signal, or cooperate with the gate bias controller to complete control, and/or the like. The signal detection module may be considered as the controller 203 or a sub-control unit in the controller 203, or may be considered as the processor 204 or a sub-unit in the processor 204. A histogram establishment module is configured to: detect and process a signal, to obtain detected data (for example, a statistical histogram). The memory is configured to provide storage space. A digital processor (DSP) is configured to perform further processing of a signal, for example, filtering, or ToF extraction. An interface is configured to: provide an input and/or output, and/or is configured to: receive and/or send data.

In a detection process, the gate bias controller may control a laser emitter to emit a first laser signal. The gate bias controller may control the array detector to receive a first echo signal. The first echo signal includes a reflected signal corresponding to the first laser signal.

A first time location may be obtained, based on the first echo signal, by using a detection element and the signal detection module. The signal detection module may output the first time location or indication information of the time location to the gate bias controller by using a control signal. Correspondingly, the gate bias controller controls an emitting unit to emit a second laser signal, and controls the array detector to receive a second echo signal in a first time window. The second echo signal includes a reflected signal corresponding to the second laser signal.

Further, the second echo signal may output electrical signal data through the detection element. The electrical signal data is used to obtain a detection result of a detection area.

Optionally, the TDC converts the second echo signal to the detected data, for example, a statistical histogram shown in an area 401. Optionally, the detected data may be stored in the memory. Alternatively, the detected data may be further output to the data signal processor (DSP) or the like to perform an operation like filtering or TOF extraction, to obtain a detection result (for example, one of point cloud data, an image, or depth data).

Optionally, one or more of the electrical signal data, the detected data, and the detection result may be output, through a communication interface, to an external apparatus for processing, for example, may be output, through a mobile industry processor interface (Mobile Industry Processor Interface, MIPI) shown in FIG. 4, to the external apparatus for processing.

It should be noted that, the figure is for ease of description, and therefore, modules that complete functions are described separately. This is not used as a limitation on a structure of the detection apparatus. The modules shown in FIG. 4 may be implemented by hardware, software, or a combination of hardware and software. For example, the signal detection module may be an independent hardware structure, or may be integrated into the controller 203 or the processor 204, or the signal detection module may be a software module and implement a corresponding function by executing the processor. For ease of description of the function, the signal detection module is used as an independent module in the figure herein. This does not constitute a limitation on an implementation form of the signal detection module.

For example, it should be understood that the histogram establishment module shown in FIG. 4 is configured to complete a histogram establishment function. An implementation of the histogram establishment module may be implemented by one or more pieces of software or hardware, a combination of software and hardware, or the like.

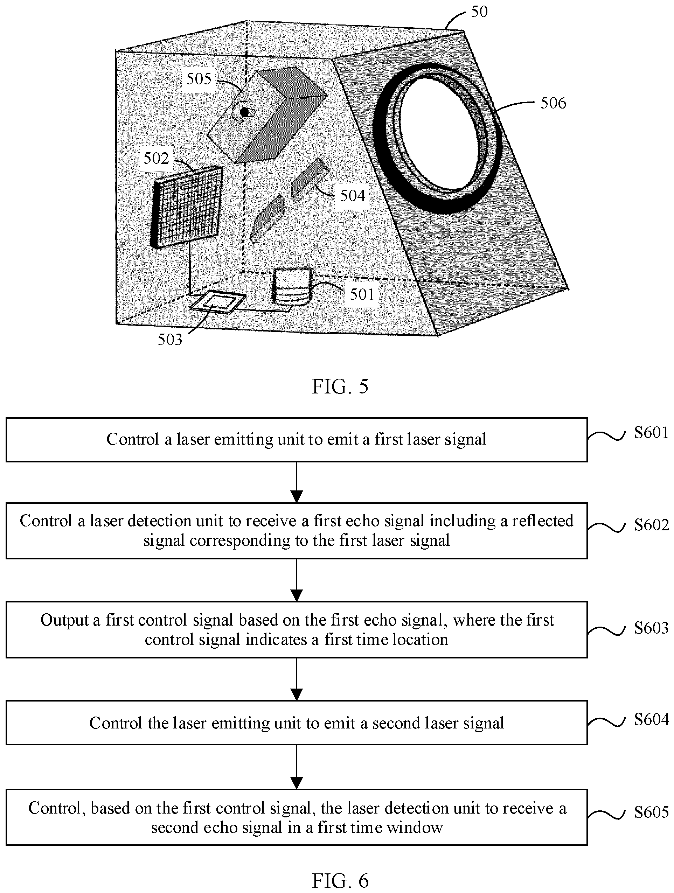

In a possible design, the detection apparatus 20 and/or the detection apparatus 40 may be a laser detection apparatus like a lidar or a fusion detection radar. FIG. 5 is a schematic diagram of a structure of a possible lidar 50 according to an embodiment of this application. A laser emitter 501 is configured to emit a laser signal. A laser detector 502 is configured to: receive an optical signal, and further convert the optical signal into an electrical signal. A controller 503 may control the laser emitter 501 and/or the laser detector 502. Optionally, the lidar 50 may further include an optical element 504, an optical element 505, and an optical element 506. The optical element 504 includes two parts, and may reflect an optical signal. The optical element 505 may rotate (or the optical element 505 may also be referred to as a scanning element), to perform detection at different angles. The optical element 506 is an optical window. A laser signal generated by the laser emitter 501 may be irradiated into a detection area via the optical element 505 and through the optical element 506. An object from the detection area may reflect an optical signal, and the reflected optical signal is irradiated on the detector 502 through the optical element 506, and via the optical element 505 and the optical element 504.

In this embodiment of this application, target detection includes two phases of detection processes. In a first phase of detection process, the controller 503 may control the laser emitter 501 to emit a first laser signal to the detection area, and the laser detector 502 receives a first echo signal. The first echo signal includes a reflected signal corresponding to the first laser signal. The first echo signal may be used to determine a first time location, and the first time location corresponds to a first feature signal. In a second phase of detection process, the controller 503 may control the laser emitter 501 to emit a second laser signal, and the controller 503 may control the laser detector 502 to receive a second echo signal in a time window. The second echo signal includes a reflected signal of the second laser signal. The time window includes the first time location.

It should be noted that the lidar shown in FIG. 5 is merely an example of the detection apparatus, and there may be a plurality of specific product implementations. For example, this embodiment of this application is applicable to a scanning-type lidar, a flash (flash) lidar, or a fusion detection radar. For another example, this embodiment of this application is applicable to a mechanical lidar, a solid-state lidar, or a hybrid solid-state lidar. For another example, the optical element 505 may include a swing mirror, a rotating polygon mirror (Polygon), a micro-electro-mechanical system (Micro-Electro-Mechanical System, MEMS) micro-mirror, or a combination of the foregoing elements. For another example, the laser emitter 501 and the laser detector 502 may alternatively have a plurality of possible forms, structures, and location settings. FIG. 5 is described by using an example in which three optical elements are included. This is not intended to limit a quantity and functions of the optical elements. In a specific implementation process, the lidar may include more or fewer optical elements.

The following describes the method provided in embodiments of this application.

FIG. 6 is a schematic flowchart of a detection control method according to an embodiment of this application. Optionally, the detection control method may be applied to the detection apparatus shown in FIG. 2, FIG. 4, or FIG. 5.

The method shown in FIG. 6 includes at least the following steps.

Step S601: Control a laser emitting unit to emit a first laser signal.

Specifically, step S601 may be implemented by a control apparatus. Optionally, the control apparatus may be included in the detection apparatus, or may be deployed outside the detection apparatus. For example, the control apparatus may be the controller 203 and/or the processor 204 in the detection apparatus 20 shown in FIG. 2. For another example, the control apparatus may be a module in the controller 203 shown in FIG. 2, for example, a chip or an integrated circuit. For another example, the control apparatus may be the gate bias controller or the signal detection module (or the gate bias controller and the signal detection module) shown in FIG. 4. For another example, the control apparatus may be the controller 503 or a module in the controller 503 shown in FIG. 5, for example, a chip or an integrated circuit. For another example, the detection apparatus is a vehicle-mounted radar. The control apparatus may be a controller in a vehicle (for example, an MDC in the vehicle), to control the vehicle-mounted radar to work.

Optionally, the control apparatus may include one or more of the following apparatuses: a controller, a processor, an application processor (application processor, AP), a TDC, a filter, a graphics processing unit (graphics processing unit, GPU), a microprocessor unit (microprocessor unit, MPU), an application-specific integrated circuit (Application-Specific Integrated Circuit, ASIC), an image signal processor (image signal processor, ISP), a digital signal processor (digital signal processor, DSP), a field programmable gate array (Field Programmable Gate Array, FPGA), a complex programmable logic device (Complex programmable logic device, CPLD), a coprocessor (assisting a central processing unit in completing corresponding processing and application), a microcontroller unit (Microcontroller Unit, MCU), a neural-network processing unit (neural-network processing unit, NPU), and/or the like. The laser emitting unit includes a laser emitter, configured to emit a laser signal. An action of emitting the laser signal by the laser emitting unit may be controlled by the control apparatus. For example, the control apparatus sends a control signal to the laser emitting unit, and the laser emitting unit emits a laser signal in response to the control signal.

In a possible design, the control apparatus may include a plurality of sub-control units. For example, as shown in FIG. 2, the control apparatus may include two sub-control units. One sub-control unit (referred to as a first sub-control unit for ease of differentiation) is located in the controller 203 (only for example), and the other sub-control unit (referred to as a second sub-control unit for ease of differentiation) is deployed in the laser emitter 201. In a design, the first sub-control unit may send a control signal (referred to as a second control signal for ease of description) to the second sub-control unit, and the second sub-control unit controls, in response to the second control signal, the laser emitter 201 to emit a laser signal.

Step S602: Control a laser detection unit to receive a first echo signal including a reflected signal corresponding to the first laser signal.

Specifically, the first echo signal includes the reflected signal corresponding to the first laser signal.

The laser detection unit includes a detector, may receive the first echo signal, and may convert the first echo signal into an electrical signal. Further, the electrical signal may be output to another apparatus (for example, a signal detection apparatus like the TDC) for signal detection.

The laser detection unit may include one or more detection elements. The detection element may be a single-photon detection element, for example, an APD or an SPAD. For example, the laser detection unit may be in an array form, for example, an array of a specification like a 1×2 array, a 2×3 array, or a 3×3 array. This is not limited in this application.

It should be understood that, if the laser detection unit is originally in an on state, the laser detection unit may be controlled to maintain the on state, to receive the first echo signal.

If the laser detection unit is originally in an off state, a control signal may be sent, to turn on the laser detection unit, so as to receive the first echo signal.

Step S602 may be implemented by the control apparatus. For details, refer to the control apparatus in step S601.

Further, the control apparatus may control a voltage of the detection element in the laser detection unit, to control a status of the laser detection unit. For example, as shown in FIG. 3, if the control apparatus inputs a high level to a gate circuit, the detection element in the detection unit may be controlled to be in an on state, so that the detection element can receive the first echo signal. Similarly, the control apparatus inputs a low level to the gate circuit, so that the detection element in the detection unit may be controlled to be in an off state.

In a possible design, the control apparatus may include a plurality of sub-control units. For example, as shown in FIG. 2, the control apparatus may include two sub-control units. One sub-control unit (referred to as a third sub-control unit for ease of differentiation) is located in the controller 203 (only for example), and the other sub-control unit (referred to as a fourth sub-control unit for ease of differentiation) is deployed in the laser detector 202. The third sub-control unit may send a control signal (referred to as a fourth control signal for ease of description) to the fourth sub-control unit, and the fourth sub-control unit controls, in response to the fourth control signal, the laser detector 202 to receive the first echo signal.

Step S603: Output a first control signal based on the first echo signal.

The first control signal indicates a first time location. The first time location may be a detected time location at which a suspected detected object exists. Optionally, the first time location may be a time point, may be a time period (including a start time and an end time, including a start time and duration, including duration and an end time, or the like), or may be a plurality of time points or a plurality of time periods.

Optionally, the first time location may correspond to a first feature signal. The first feature signal belongs to one or more of feature signals, and may indicate a special waveform feature.

Optionally, the first feature signal may include at least one of a pulse signal, a peak signal, a rising-edge signal (or referred to as a front-edge signal), a waveform mass center signal, or the like. The pulse signal is a signal that transitorily fluctuates and that is like a pulse signal. The peak signal is a signal corresponding to a highest value of a signal value in a period of time. The rising-edge signal is a segment of signal of which signal value continuously increases in a period of time. The waveform mass center signal is a signal corresponding to a mass center location of waveform information.

In a possible scenario, the feature signal may correspond to a target object in the detection area. Therefore, detection may be performed again at a time location at which the feature signal is located, so that the predicted target object can be detected, to improve effectiveness of the detection signal. For example, as shown in FIG. 1, the target object 103 and the target object 104 in the detection area reflect an emitted laser signal, and two pulse signals shown in the area 105 and the area 106 are formed in the echo signals. In the second phase of detection process, a time location corresponding to each of the two pulse signals may be detected. For example, as shown in (d) in FIG. 1, a time location corresponding to a pulse signal shown in the area 105 is detected, so that the reflected signal from the target object 103 can be received. Because detection is performed based on a time window, interference of a signal at a time location outside the time window is avoided, so that signal effectiveness is improved, to improve detection performance of a lidar.

Certainly, the target object corresponding to the feature signal is predicted. Actually, the target object may exist, or the target object may not exist. For example, the vehicle-mounted radar is used as an example. A laser detector of a vehicle A receives a reflected signal that is reflected by an object and that is of a laser signal of a vehicle-mounted radar of the vehicle A, to form a pulse signal P1. The detection apparatus may predict, based on a time location of the pulse signal P1, that a target object T1 may exist at a corresponding distance. In this case, the detection apparatus detects again the time location at which the pulse signal P1 is located. This can reduce a possibility that another interference signal causes interference to a reflected signal of the target object T1, reduce an amount of data that needs to be processed, and improve detection performance of the detection apparatus.

For another example, the laser detector of the vehicle A may receive a related signal of an ambient light source (for example, a reflected signal that is reflected by an object and that is of a laser signal of a vehicle B), to form a pulse signal P2. The detection apparatus may predict, based on a time location of the pulse signal P2, that a target object T2 may exist at a corresponding distance. However, the target object T2 actually does not exist, that is, the pulse signal P2 is a "false alarm signal". In this case, the detection apparatus detects again the time location at which the false alarm signal is located. This can reduce interference of the false alarm signal to a detection result and improve the detection performance of the detection apparatus.

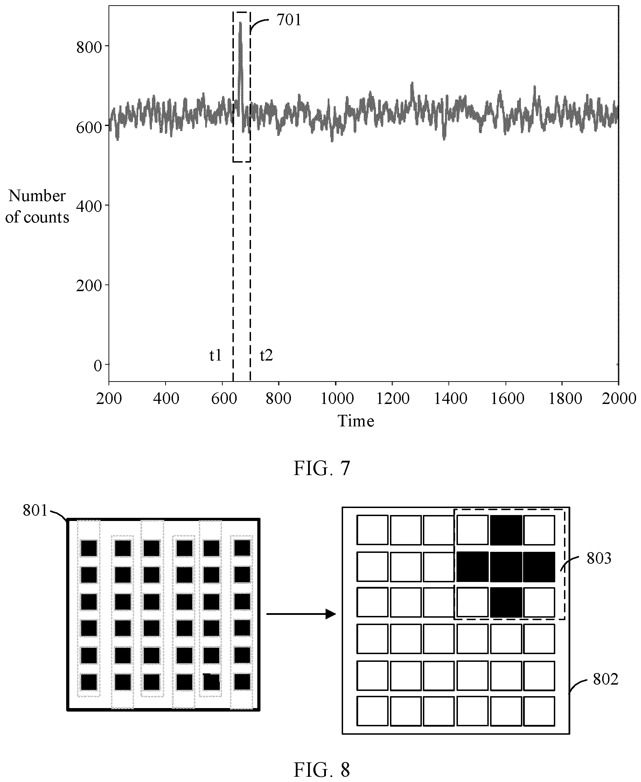

In a possible design, the first feature signal is obtained based on the first echo signal. Specifically, the laser detection unit may receive the first echo signal, and then output an electrical signal. The output electrical signal may include a plurality of feature signals, or a plurality of feature signals may be obtained by processing the output electrical signal (for example, establishing a statistical histogram). FIG. 7 is a schematic diagram of a possible statistical histogram according to an embodiment of this application. The statistical histogram shown in FIG. 7 is used to process the electrical signal output by the laser detection unit. A vertical coordinate is the number of counts, and a horizontal coordinate is the time. An area 701 includes a pulse signal. Because the pulse signal belongs to a feature signal, the first time location may be determined based on the time location of the pulse signal, t1 to t2, based on the statistical histogram.

Step S603 may be implemented by the control apparatus. For details, refer to the control apparatus in step S601.

In a possible design, the control apparatus includes the signal detection module. The control apparatus may detect the electrical signal by using the signal detection module, to obtain the first time location. For example, the laser detection unit obtains the electrical signal by converting the first echo signal. The electrical signal may be output (which may be directly output or output after being processed by the TDC or the filter) to the signal detection module. The signal detection module detects the electrical signal, to obtain the first time location.

In another possible design, step S602 is completed by a processing module in the detection apparatus. For example, the detection apparatus 40 shown in FIG. 4 is used as an example. An array detector receives the first echo signal, and converts the first echo signal, to obtain the electrical signal (referred to as a to-be-detected signal for ease of description). The to-be-detected signal may be output to the signal detection module (or the to-be-detected signal is first output to the TDC, the TDC performs time-to-digital conversion processing, and then a processed to-be-detected signal is output to the signal detection module). The signal detection module detects the to-be-detected signal, to obtain the first time location corresponding to the first feature signal. The signal detection module outputs the first control signal. The first control signal includes the first time location or indication information of the first time location. Optionally, a gate bias controller may receive the first control signal, and control the laser emitting unit and/or the laser detection unit based on the first control signal.

Optionally, if the detection unit is an array detection unit, an electrical signal obtained by receiving the first echo signal by the detection unit may be output signals of a plurality of pixels. For example, the laser detection unit includes N detection elements. One detection element may output an output signal of one pixel. In this case, the laser detection unit may output electrical signals of N pixels. Alternatively, for example, the laser detection unit includes M detection elements. Two detection elements may combine to output an output signal of one pixel. In this case, the laser detection unit may output electrical signals of M/2 pixels. A pixel combining manner is not specifically limited in this application.

Further, optionally, the first feature signal is obtained by performing superposition processing on output signals of adjacent pixels. The adjacent pixels correspond to at least two adjacent detection elements in the laser detection unit. For example, FIG. 8 is a schematic diagram of an output of a laser detection unit according to an embodiment of this application. As shown in FIG. 8, an output of a laser detection unit 801 is shown in an area 802, where one small grid is one pixel. An output of one pixel corresponds to one detection element in the laser detection unit 801. When the laser detection unit receives the first echo signal, some detection elements receive the optical signal, and may generate electrical signal outputs (for example, a black grid in the area 802 is a pixel having an electrical signal output). Some detection elements may not receive the optical signal, and therefore do not generate electrical signal outputs (for example, a white grid in the area 802 is a pixel having no electrical signal output). When the signal output by the laser detection unit is processed, to detect a feature signal as much as possible, output signals of adjacent pixels may be superposed, to obtain a superposed signal, where the superposed signal includes the feature signal.

There may be at least the following two possible designs when superposition processing is performed on the output signals of adjacent pixels:
Design 1: Output signals of any P adjacent pixels may be superposed. For example, output signals of horizontal pixels are superposed, or output signals of vertical pixels are superposed. For another example, as shown in FIG. 8, in a plurality of pixels, output signals of pixel blocks in a 3×3 area are superposed.
Design 2: Outputs of adjacent detection elements with signals are superposed. Further, in detection elements with signals, a superposition area may be divided. For example, signals of any plurality of adjacent detection elements with signals are superposed, or any plurality of adjacent detection elements with signals are divided based on a quantity, to obtain a plurality of areas, and then signals of detection elements in each area are superposed, or pixels with signals may be divided in another manner. The following gives two possible cases.

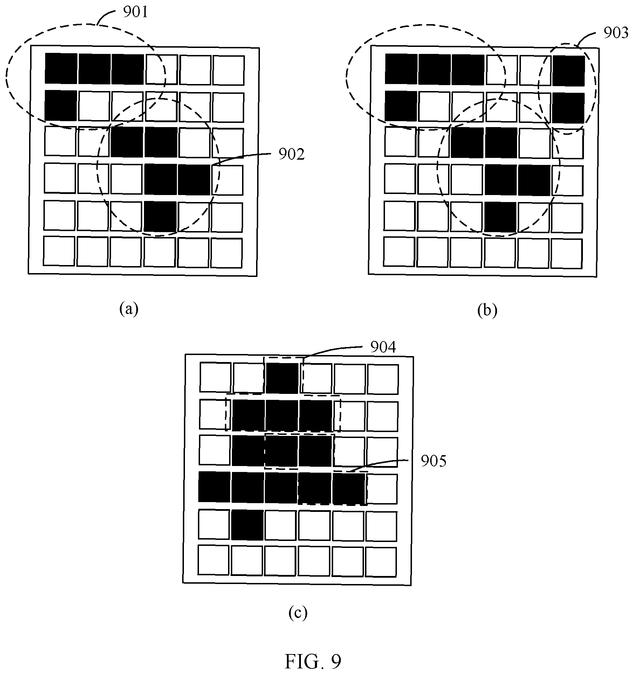

Case 1: The signals of any plurality of adjacent detection elements with signals are superposed. FIG. 9 is another schematic diagram of an output of a laser detection unit according to an embodiment of this application. As shown in (a) in FIG. 9, in a plurality of pixels, pixels having electrical signal outputs are shown in an area 901 and an area 902. During superposition, the area 901 is four adjacent pixels, and the area 902 is five adjacent pixels. Therefore, output signals of the four pixels in the area 901 may be superposed, and output signals of the five pixels in the area 902 may be superposed.

In this case, if there is still a pixel having a signal in another area, and the pixel is not adjacent to any pixel in the area 901 and the area 902, the area is used as a third area for pixel superposition. As shown in (b) in FIG. 9, there is a pixel having a signal in the area 903. Because the pixel is not adjacent to any pixel in the area 901 and the area 902, output signals of two pixels in the area 803 are superposed. Case 2: Adjacent detection elements having signals are divided based on a quantity, to obtain a plurality of sub-areas. For example, as shown in (c) in FIG. 9, pixels having signals in an area 904 may be divided into a plurality of sub-areas based on a quantity. For example, based on an example in which four or five signals are in each area, the area 904 is a sub-area, an area 905 is a sub-area, and remaining pixels having signals are a sub-area. When superposition is performed, output signals of four pixels in the area 904 may be superposed, output signals of four pixels in the area 905 may be superposed, and output signals of the remaining five pixels are superposed.

Optionally, when sub-area division is performed on a plurality of pixels with signals, division may be performed randomly, based on a mass center (to make pixels in the area as centralized as possible), or based on a feature of an echo signal, or a sub-area division method may be obtained through calculation in a manner like reinforcement learning. A quantity of pixels in a sub-area obtained through division may be preset or predefined, or may be determined based on a shape and a total quantity of pixels having signals. This is not limited in this application.

It should be understood that the foregoing two cases may coexist. For example, when a quantity of adjacent detection elements having signals does not exceed (less than, or less than or equal to) a threshold, direct superposition is performed, for example, the area 901, the area 902, and the area 903. When a quantity of adjacent detection elements having signals exceeds (greater than or equal to, or greater than) a threshold, the adjacent detection elements are divided into a plurality of sub-areas and then are superposed separately. Optionally, the threshold may be predefined or preset, or may be obtained through calculation by using an algorithm, a reinforcement learning model, or the like, or may be input by a user or another device.

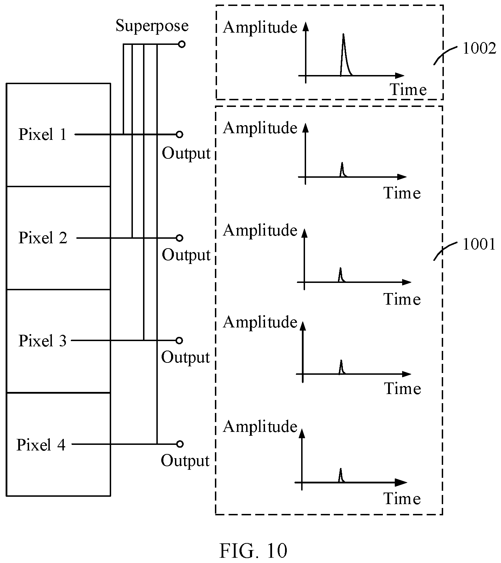

For example, FIG. 10 is a schematic diagram of superposing signals according to an embodiment of this application. Signals separately output by four pixels (a pixel 1, a pixel 2, a pixel 3, and a pixel 4) shown in FIG. 10 are shown in an area 1001. It may be learned that a fluctuation of a pixel is not obvious, and therefore, missed detection of a signal is easily caused. After the signals output by the four pixels are superposed, outputs of the four pixels are shown in the area 1002, and an obvious pulse signal can be seen, so that a signal returned by a detection target is more obvious, to avoid missed detection of a signal.

Step S604: Control the laser emitting unit to emit a second laser signal.

Optionally, the laser emitting unit is configured to emit a laser signal. Emitting the laser signal by the laser emitting unit may be controlled by the control apparatus. For example, the control apparatus may send a control signal (referred to as a third control signal for ease of differentiation) to the laser emitting unit, and the laser emitting unit emits the second laser signal in response to the third control signal.

For related descriptions, refer to related descriptions in step S601.

Step S605: Control, based on the first control signal, the laser detection unit to receive a second echo signal in a first time window.

The second echo signal includes a reflected signal corresponding to the second laser signal. The first time window is related to the first time location, and the first time window includes the first time location.

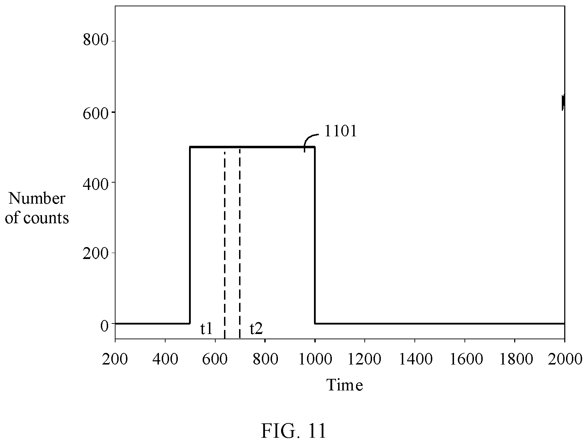

For example, FIG. 11 is a schematic diagram of a possible time window according to an embodiment of this application. The first time location indicated by the first control signal is t1 to t2, and the time window shown in FIG. 11 includes the first time location. With reference to FIG. 7 and step S603, it can be learned that the first time location is a location of the first feature signal. In a possible scenario, the first time location may be a time location corresponding to an echo signal of a suspected detection target. Therefore, in the second phase of detection process, detection is performed in the first time window, so that the suspected detection target can be detected, to avoid interference. In another aspect, the laser detection unit may not receive an optical signal in a time outside the first time window, to effectively reduce an amount of data that needs to be processed.

Optionally, the first time window may be further related to first duration. The duration indicates a width of the time window. For example, if the first duration is 10 milliseconds (ms), an interval between a start time and an end time of the time window is 10 ms. Optionally, the first duration may be predefined or preset, or may be related to duration of the second laser signal. For ease of understanding, the following gives several possible time window designs.

Design 1: The first time location is at a middle location of the first time window. For example, a laser emitting time point is a moment 0 and the first duration is 10 ms. If the first time location is 15 ms to 19 ms, a start location of the first time window is 12 ms to 22 ms.

Design 2: The time location is at a start location of the first time window. For example, a laser emitting time point is a moment 0 and the first duration is 10 ms. If the first time location is 15 ms to 19 ms, a start location of the first time window is 15 ms to 25 ms.

Design 3: The time location is at a first preset location of the first time window. For example, a laser emitting time point is a moment 0, the first duration is 10 ms, and the first preset location is 1 ms after the start time of the time window. If the first time location is 15 ms to 19 ms, a start location of the first time window is 14 ms to 24 ms.

Optionally, step S605 may be implemented by the control apparatus. For details, refer to descriptions of the control apparatus in step S602.

Optionally, the second echo signal is used for target detection. Further, optionally, the second echo signal is processed, to obtain a detection result of the detection area, for example, distance information, point cloud information, and reflection intensity information of the detection area.

In a possible design, the first control signal may indicate a plurality of time locations. Optionally, the laser detection unit may be controlled to perform detection in a plurality of time windows (each time window includes at least one of the plurality of time locations), to improve detection efficiency. Alternatively, the detection apparatus may perform a plurality of times of laser emission and a plurality of times of detection. In each laser emission and detection process, the detection unit is controlled to receive the echo signal in one or more time windows. Through the plurality of times of detection, an amount of data that needs to be processed after each time of detection can be reduced, and a data processing speed of the data processing module can be adapted to. Further, through the plurality of times of detection, in each detection process, a time for receiving an echo signal by the detector is short, so that detection accuracy can be improved, mutual interference between echo signals can be avoided, and accuracy of the detection result can be improved.

For ease of understanding, the following uses three possible cases as examples.

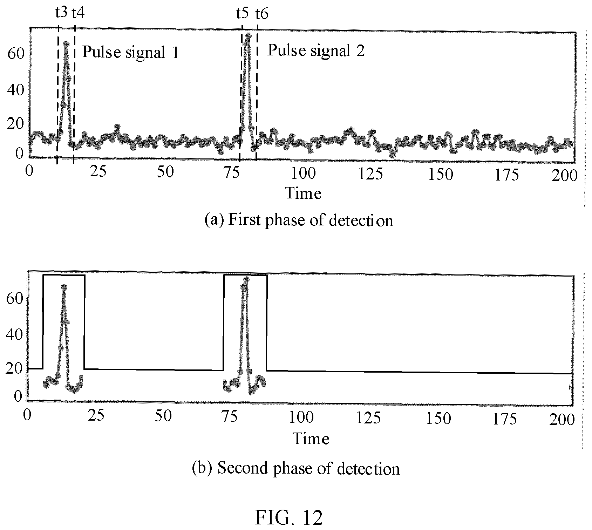

Case 1: The first control signal may indicate a plurality of time locations, and the laser detection unit may be controlled to perform detection in the plurality of time windows, where each time window includes one or more time locations. For example, FIG. 12 is a possible schematic diagram of gating according to an embodiment of this application. In the first phase of detection process, the laser detection unit may remain in the on state in the entire detection time, and an electrical signal obtained by the laser detection unit by receiving the first echo signal is shown in (a) in FIG. 12. Based on the signal shown in (a) in FIG. 12, it may be determined that the feature signals are a pulse 1 and a pulse 2, and time locations corresponding to the pulse 1 and the pulse 2 are respectively as follows: a time location t3 to t4, and a time location t5 to t6. For example, the first control signal may indicate the time location t3 to t4 and the time location t5 to t6.

As shown in (b) in FIG. 12, in the second phase of detection process, the laser detection unit is controlled to remain in the on state in the first time window and the second time window, and is in the off state in a remaining time. The first time window includes the location t1 to t2, and the second time window includes the location t3 to t4. Further, the echo signal received in the second phase of detection process is used to obtain the detection result of the detection area.

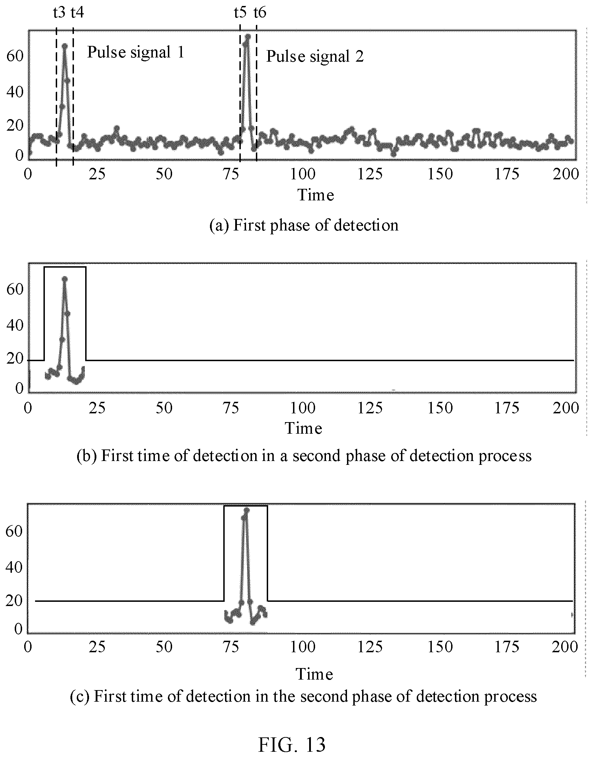

Case 2: The first control signal may indicate two time locations. The laser detection unit is controlled, by using the first control signal, to perform detection at least twice. Time windows in the two times of detection processes separately include the two time locations. For example, FIG. 13 is another possible schematic diagram of gating according to an embodiment of this application. As shown in (a) in FIG. 13, for the first phase of detection process, refer to Case 1. Details are not described herein again.

The second phase of detection process may include a plurality of times of detection. The following uses an example in which a first time of detection and a second time of detection are included for description. During the first time of detection, the laser emitting unit emits the laser signal (referred to as the second laser signal for ease of differentiation), and the laser detection unit remains in the on state in the first time window, and may receive the second echo signal (the second echo signal includes the reflected signal of the second laser signal). As shown in (b) in FIG. 13, the first time window includes the location t1 to t2.

During the second time of detection, the laser emitting unit emits a laser signal (referred to as a third laser signal for ease of differentiation), and the laser detection unit remains in the on state in a third time window, and may receive a third echo signal (the third echo signal includes a reflected signal of the third laser signal). As shown in (c) in FIG. 13, the third time window includes a location t3 to t4.

Further, the second echo signal and the third echo signal that are received in the second phase of detection process is used to obtain the detection result of the detection area.

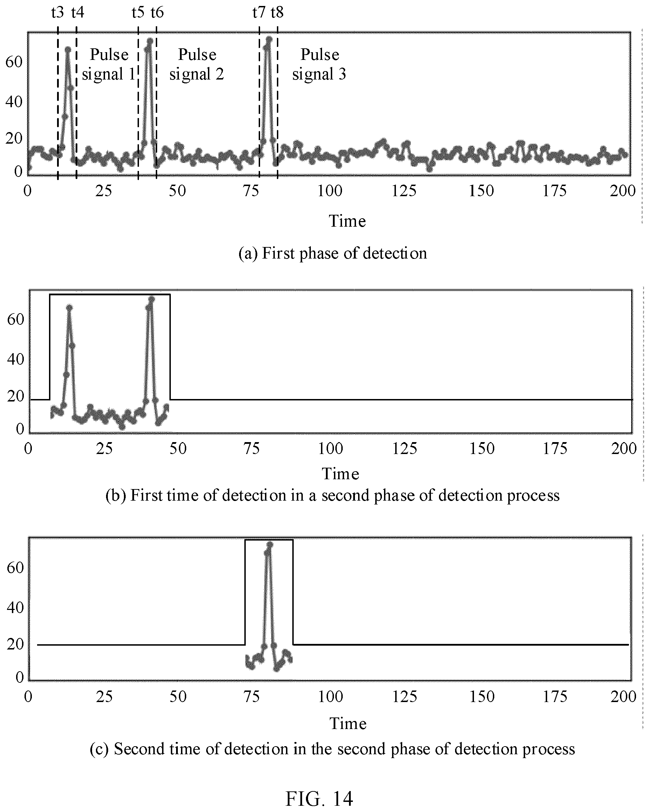

Case 3: The first control signal may indicate a plurality of time locations. At the plurality of time locations, time locations with close locations may be included in a same time window. FIG. 14 is a possible schematic diagram of gating according to an embodiment of this application. As shown in (a) in FIG. 14, for the first phase of detection process, refer to Case 1. Details are not described herein again.

The second phase of detection process may include a plurality of times of detection. The following uses an example in which a first time of detection and a second time of detection are included for description. During the first time of detection, the laser emitting unit emits the laser signal (referred to as the second laser signal for ease of differentiation), and the laser detection unit remains in the on state in the first time window, and may receive the second echo signal (the second echo signal includes the reflected signal of the second laser signal). As shown in (b) in FIG. 14, the first time window includes the location t1 to t2 and a time location t3 to t4.

During the second time of detection, the laser emitting unit emits a laser signal (referred to as a third laser signal for ease of differentiation), and the laser detection unit remains in the on state in a third time window, and may receive a third echo signal (the third echo signal includes a reflected signal of the third laser signal). As shown in (c) in FIG. 14, the third time window includes a location t5 to t6.

Further, the second echo signal and the third echo signal that are received in the second phase of detection process is used to obtain the detection result of the detection area.

It should be noted that the plurality of cases may be combined in a case in which the plurality of cases are not mutually exclusive.

Optionally, when the plurality of time locations are included, a plurality of control signals may alternatively be used to control the detection unit to receive the optical signal. For example, in an example in which two time locations (referred to as the first time location and a fifth time location for ease of differentiation) are included, the control apparatus may output two control signals (referred to as the first control signal and a fifth control signal for ease of differentiation). The first control signal indicates the first time location, and the detection unit may be controlled, by using the first control signal, to receive the second echo signal in the first time window. The fifth control signal indicates the fifth time location, and the laser detection unit may be controlled, by using the fifth control signal, to receive a fourth echo signal in a fourth time window. The fourth time window includes the fifth time location. Further, the second echo signal and the fourth echo signal are used to obtain the detection result of the detection area.

Optionally, the start time of the first time window is after the fourth time location or is the same as the fourth time location. The fourth time location corresponds to a distance between the laser emitting unit and a first optical element; the fourth time location corresponds to a distance between a first optical element and the laser detection unit; or the fourth time location corresponds to a distance between the laser emitting unit and a first optical element and a distance between a first optical element and the laser detection unit. The first optical element is an outermost optical element that belongs to the detection apparatus and that is in an emitting optical path (or a receiving optical path) of the second laser signal. For example, the outermost optical element may be an optical window of the detection apparatus. Optionally, optical elements included in the detection apparatus may be one or more of the following elements: a lens (including but not limited to one or more of a lens, a spectroscope, a polarizer, a wave plate, a cylindrical mirror, or an optical filter), an optical window, or another component that may be used for optical path design.

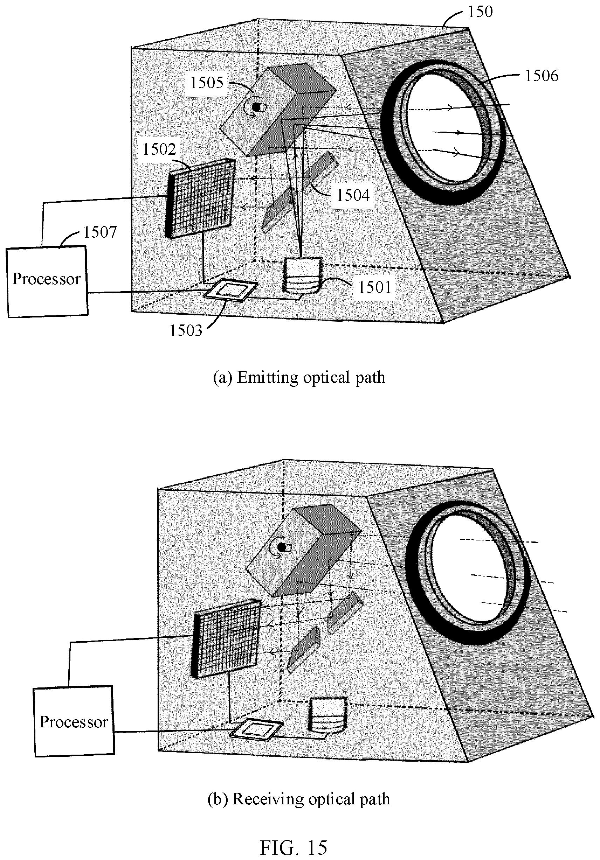

For example, FIG. 15 is a schematic diagram of an emitting optical path and a receiving optical path of a possible detection apparatus according to an embodiment of this application. (a) in FIG. 15 shows an emitting optical path of a detection apparatus 150, and (b) in FIG. 15 shows a receiving optical path of the detection apparatus 150. A controller 1503 in the detection apparatus 150 may control a laser emitting unit 1501 to emit a laser signal, and control a laser detection unit 1502 to receive an echo signal. A processor 1507 is configured to process detected data to obtain a detection result. Optionally, the processor 1507 may be located inside the detection apparatus 150, or may be located outside the detection apparatus 140. Optionally, the detection apparatus 150 includes one or more optical elements, for example, an optical element 1504, an optical element 1505, and an optical element 1506 shown in FIG. 15. It should be noted that FIG. 15 is merely an example for description. A specific product may be implemented in a plurality of manners. For example, the detection apparatus 150 may include more or fewer optical elements. For another example, the optical element 1505 may be replaced with a rotating polygon mirror, a swing mirror, an MEMS, or a combination of the foregoing elements. This application is also applicable to a plurality of types of lidar, such as a scanning type, a flash type, a mechanical type, a solid-state type, or a hybrid solid-state type.

As shown in (a) in FIG. 15, the emitting optical path of the detection apparatus 150 is via the optical element 1505 and passes through the optical element 1506. Because it is difficult for the optical element to implement full transmission or total reflection, when an emitted laser signal is via the optical element 1505 and passes through the optical element 1506, some of the laser signal may be reflected by the optical element 1505 and/or the optical element 1506. In (a) in FIG. 15, a solid line is the emitted optical signal, and a dashed line is an optical signal reflected by the optical element. The reflected optical signal is irradiated into the laser detection unit 1502, so that a detection element in the laser detection unit 1502 is saturated, and a true echo signal is submerged.

For example, because the saturated detection element cannot be recovered in a short time, when the echo signal shown in (b) in FIG. 15 reaches the detection element, some (or all) of optical signal may not be received by the detection element, and consequently, the true echo signal is submerged, and the detection result is inaccurate.

For example, because the time of flight corresponds to a distance, if the optical signal reflected by the outermost optical element (the optical element 1506) arrives at the fourth time location, the start time of the time window may be set to be after the fourth time location or the same as the fourth time location. In one aspect, a possibility that reflected light of an optical element of the detection apparatus causes interference to an echo signal can be reduced, missed detection of a signal is avoided, and signal effectiveness and accuracy of the detection result are improved. In another aspect, a detection time is shortened, so that an amount of data is correspondingly reduced, and consumption of a computing resource can be reduced.

In a possible design, the laser detection unit may have different working modes. For example, the laser detection unit may have at least two working modes: a free running mode and a gate mode. In the free running mode, the laser detection unit may be always in the on state, or always in the off state, or in an adaptively adjusted on or off state. In the gate mode, the laser detection unit may be controlled by another apparatus or module to be in the on or off state. Optionally, in step S601, the laser detection unit may be in the free running mode. In step S604, the laser detection unit is in the gate mode.

Optionally, the working mode of the laser detection unit may be controlled by using a control signal. For example, a gate starting signal is used, so that the laser detection unit may work in the gate mode.

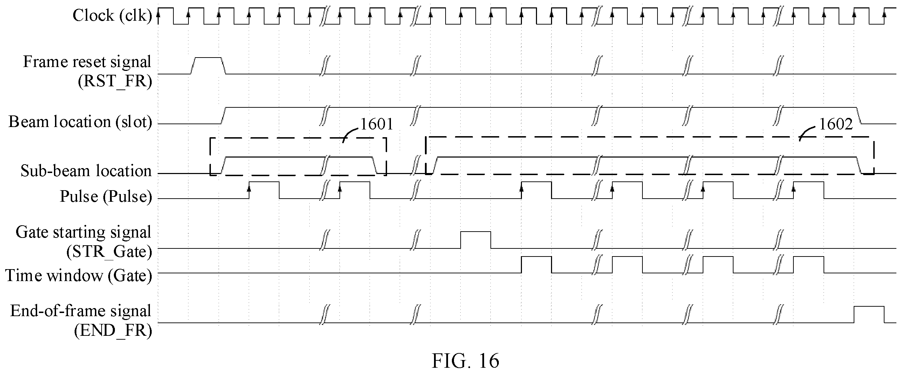

For example, FIG. 16 is a schematic diagram of a possible time sequence used when a scanning-type lidar works according to an embodiment of this application. The detection apparatus works in a form of a detection frame. Generally, detection of one detection frame may generate one frame of point cloud image in one detection area. For the scanning-type radar, the detection area needs to be scanned in a row (or column, or area) form during detection. Each row (or each column, or each block of area) corresponds to one beam location (slot, or referred to as a subframe). As shown in FIG. 16, a clock (clk) signal is used for timing, alignment, or the like. After a frame reset signal (RST _FR) is at a high level, a detection frame starts to detect a first beam location. In this embodiment of this application, one beam location may include one or more sub-beam locations (the following uses an example in which two sub-beam locations are included for description). For example, in an area 1601, at a first sub-beam location, the laser emitting unit may emit a laser signal one or more times, as shown by a pulse (Pulse) signal; and the laser detection unit is in the free running mode, may receive the first echo signal, and is used to determine one or more time locations based on the first echo signal.

As shown the signal in an area 1602, a gate starting (STR_Gate) signal is used, so that the laser detection unit enables the gate mode. After the gate mode is enabled, the laser detection unit may start to detect within a time window, as shown in a time window (Gate) signal. When the time window signal is at a high level, the laser detection unit is in the on state, and may receive the echo signal. When the time window signal is at a low level, the laser detection unit is in the off state. In a detection frame, a plurality of beam locations may be detected. When the end-of-frame signal (END _FR) is at a high level, the detection frame ends.

It can be learned that, at the first sub-beam location, first several pulses emitted by the laser emitting unit are used to determine a time location, and a start time and an end time of the time window may be determined based on the time location (or and the first duration). At a second sub-beam location, the laser detection unit works in the gate mode, and the laser detection unit receives the echo signal in the time window. This effectively reduces the amount of data and improves the signal effectiveness.

It should be noted that the foregoing uses the time sequence of the scanning-type detection apparatus as an example for description. This is not intended to limit an application scenario of this application. This application is also applicable to a flash-type (flash) detection apparatus.

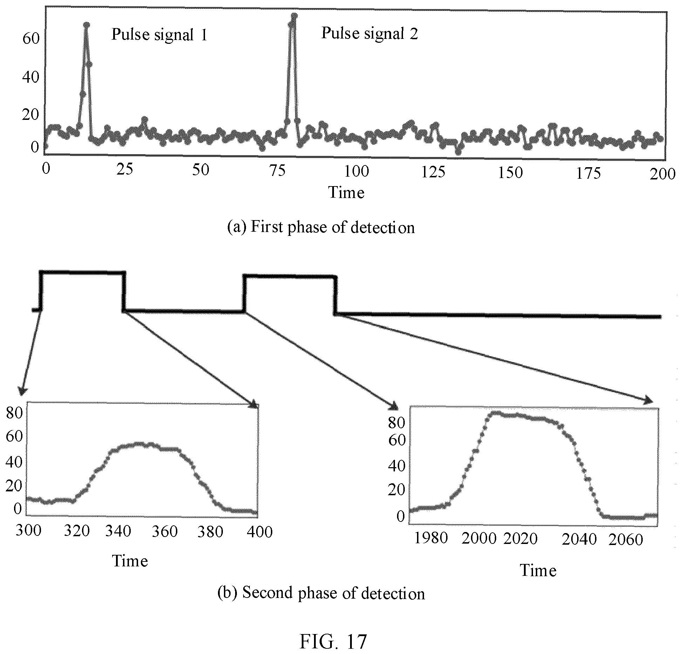

Further, optionally, the first phase of detection process (for example, the first subframe) may also be referred to as a coarse detection process, and the second phase of detection process (for example, the second subframe) may also be referred to as a fine detection process. FIG. 17 is a possible schematic diagram of gating according to an embodiment of this application. In the first phase of detection process, the laser detection unit is in the free running mode, and an electrical signal obtained by receiving the first echo signal is shown in (a) in FIG. 17. In the second phase of detection process, the laser detection unit is in the gate mode, and an electrical signal obtained by receiving the second echo signal is shown in (b) in FIG. 17. It can be learned that, a change of an electrical signal shown in (b) in FIG. 17 is more accurate, and a proportion of an effective signal is greater. Further, the detection result obtained based on the second echo signal is more accurate.

In the embodiment shown in FIG. 6, the control apparatus may control the laser emitting unit and the laser receiving unit to perform two phases of laser detection. The first phase of laser detection is used to determine a time location, and the second phase of laser detection is used for target detection in the time window including the first time location. In one aspect, duration of the first time window (namely, the first duration) in the second phase of detection process in this embodiment of this application is usually less than duration of the original detection time (for example, the detection time in the first time of detection process). The laser detection unit receives the echo signal in the first time window, so that a time for receiving the echo signal is shortened, and further detected data obtained based on the echo signal is also reduced. Consequentially, an amount of data that needs to be processed is reduced. In another aspect, a time location for receiving the echo signal in the second phase of detection process is positioned based on the time location and the first duration. In this case, the echo signal may not be received at a time location that does not belong to the first time window, so that an unrelated signal can be prevented from affecting a detection effect, effectiveness of the received echo signal is improved, and detection performance of a lidar is improved.

The foregoing describes in detail the method in embodiments of this application. The following provides an apparatus in embodiments of this application.

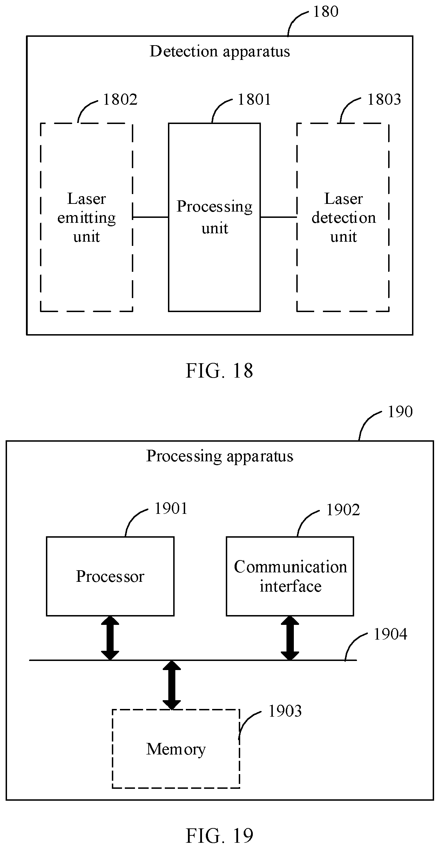

FIG. 18 is a schematic diagram of a structure of a detection apparatus 180 according to an embodiment of this application. Optionally, the detection apparatus 180 may be an independent device (for example, one or more of a lidar, a handheld terminal, a vehicle, and a robot), or may be a component (for example, a chip, a software module, or a hardware module) inside the independent device.

The detection apparatus 180 is configured to implement the foregoing detection control method, for example, the detection control method in the embodiment shown in FIG. 6.

In a possible implementation, the detection apparatus 180 may include at least one processing unit 1801. Optionally, the detection apparatus 180 may further include a laser emitting unit 1802 and a laser detection unit 1803.

In a possible implementation, the units are described as follows:

The at least one processing unit 1801 is configured to control the laser emitting unit 1802 to emit a first laser signal, and
is configured to control the laser detection unit 1803 to receive a first echo signal including a reflected signal corresponding to the first laser signal.

The at least one processing unit 1801 is further configured to output a first control signal based on the first echo signal, where the first control signal indicates a first time location.

The at least one processing unit 1801 is further configured to control the laser emitting unit 1802 to emit a second laser signal.

The at least one processing unit 1801 is further configured to control, based on the first control signal, the laser detection unit 1803 to receive a second echo signal in a first time window, where the second echo signal includes a reflected signal corresponding to the second laser signal, and the second echo signal is used for target detection.

The first time window is related to the first time location and first duration, the first time window includes the first time location, and the first duration is predefined or preconfigured.

In a possible implementation, the first time location corresponds to a first feature signal, the first feature signal is obtained based on the first echo signal, and the first feature signal includes at least one of a pulse signal, a peak signal, or a rising-edge signal.

In another possible implementation, the first control signal further indicates a second time location, and the first time window further includes the second time location.

In another possible implementation, the first control signal further indicates a second time location, and the at least one processing unit 1801 is further configured to:
control, based on the first control signal, the laser detection unit 1803 to receive the second echo signal in the first time window and a second time window, where the second time window is related to the second time location and the first duration, and the second time window includes the second time location.

In another possible implementation, the first control signal further indicates a third time location.

The at least one processing unit 1801 is further configured to control the laser emitting unit 1802 to emit a third laser signal.

The at least one processing unit 1801 is further configured to control, based on the first control signal, the laser detection unit 1803 to receive a third echo signal in a third time window, where the third echo signal includes a reflected signal corresponding to the third laser signal, the third echo signal is used for target detection, the third time window is related to the third time location and the first duration, and the third time window includes the third time location.

In another possible implementation, the laser detection unit 1803 includes at least one single-photon detection element.

In another possible implementation, the laser detection unit 1803 includes a plurality of detection elements, and one detection element corresponds to an output signal of one pixel.

The first feature signal includes a signal obtained by performing superposition processing on output signals of adjacent pixels, and the adjacent pixels correspond to at least two adjacent detection elements in the laser detection unit 1803.

In another possible implementation, the detection apparatus 180 further includes at least one optical element.

A start time of the first detection time window is after a fourth time location or is the same as a fourth time location; and the fourth time location corresponds to a distance of the second laser signal from the laser emitting unit 1802 to a first optical element in the at least one optical element, and the first optical element is an outermost optical element that belongs to the detection apparatus and that is in an emitting optical path of the second laser signal.

In another possible implementation, the laser detection unit 1803 is further configured to obtain a to-be-detected signal based on the first echo signal.

The at least one processing unit 1801 is configured to:
obtain the first time location based on the to-be-detected signal; and
output the first control signal, where the first control signal is used to control the laser emitting unit 1802 and/or the laser detection unit 1803.

In another possible implementation, the at least one processing unit 1801 is further configured to obtain a detection result of a detection area based on the second echo signal.

The fourth processing unit is configured to control, based on a fourth control signal, the laser detection unit 1803 to receive the first echo signal including the reflected signal corresponding to the first laser signal.

In another possible implementation, the detection apparatus further includes the laser detection unit 1803.

The laser detection unit 1803 is configured to receive the second echo signal in the first time window.

It should be noted herein that division into the foregoing plurality of units is merely logical division based on functions, and is not intended to limit a specific structure of the detection apparatus 180. In a specific implementation, some function modules may be subdivided into more fine function modules, and some function modules may be combined into one function module. However, regardless of whether the function modules are subdivided or combined, general procedures performed by the signal processing apparatus in the signal processing process are the same.

FIG. 19 is a schematic diagram of a structure of a processing apparatus 190 according to an embodiment of this application. The processing apparatus 190 may be an independent device (for example, one or more of a lidar, a handheld terminal, a vehicle, and a robot), or may be a component (for example, a chip, a software module, or a hardware module) inside the independent device.

The processing apparatus 190 may include at least one processor 1901 and a communication interface 1902. Further, optionally, the processing apparatus 190 may further include at least one memory 1903. Further, optionally, the processing apparatus 190 may include a bus 1904. The processor 1901, the communication interface 1902, and the memory 1903 are connected by using a bus 1904.

The processor 1901 is a module that performs an arithmetic operation and/or a logical operation. Specifically, one or a combination of a plurality of processing modules may be included, such as a central processing unit (central processing unit, CPU), an AP, a TDC, a filter, a GPU, an MPU, an ASIC, an ISP, a DSP, an FPGA, a CPLD, a coprocessor, an MCU, and an NPU.

The communication interface 1902 may be configured to provide an information input or output for the at least one processor, and/or the communication interface 1902 may be configured to receive data sent from the outside and/or send data to the outside, and may be a wired link interface including an Ethernet cable or the like, or may be a wireless link (Wi-Fi, Bluetooth, universal wireless transmission, a vehicle-mounted short-range communication technology, or another short-range wireless communication technology) interface.

The memory 1903 is configured to provide storage space, and the storage space may store data such as an operating system and a computer program. The memory 1903 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The processing apparatus 190 is configured to implement the foregoing detection control method, for example, the detection control method in the embodiment shown in FIG. 6.

In a possible design, the at least one processor 1901 may be a processor (referred to as a dedicated processor for ease of differentiation) that is specially configured to perform these methods, or may be a processor that performs these methods by invoking a computer program, for example, a general-purpose processor. Optionally, the at least one processor 1901 may further include both the dedicated processor and the general-purpose processor.

In a possible design, the at least one processor 1901 in the processing apparatus 190 is configured to invoke the computer program stored in the at least one memory 1903, to perform the detection control method, for example, the detection control method described in the embodiment shown in FIG. 6.

In a possible design, the processing apparatus 190 may be one or more of apparatuses such as the control apparatus, the controller, or the processor in the foregoing embodiments, or may be a component (for example, a chip, a software module, or a hardware module) inside the apparatuses such as the control apparatus, the controller, or the processor.

The processing apparatus 190 may control a laser emitter and a detector. Optionally, the processing apparatus 190 belongs to a detection apparatus, and the detection apparatus may further include the laser emitter and the detector, or the processing apparatus 190 may be connected to the laser emitter and the detector.

In a possible implementation, the processor 1901 in the apparatus 190 is configured to perform the following operations:
controlling the laser emitter to emit a first laser signal;
controlling the detector to receive a first echo signal including a reflected signal corresponding to the first laser signal;
outputting a first control signal based on the first echo signal, where the first control signal indicates a first time location;
controlling the laser emitter to emit a second laser signal; and
controlling, based on the first control signal, the detector to receive a second echo signal in a first time window, where the second echo signal includes a reflected signal corresponding to the second laser signal, and the second echo signal is used for target detection.

The first time window is related to the first time location and first duration, the first time window includes the first time location, and the first duration is predefined or preconfigured.

In a possible implementation, the first time location corresponds to a first feature signal, the first feature signal is obtained based on the first echo signal, and the first feature signal includes at least one of a pulse signal, a peak signal, or a rising-edge signal.

In another possible implementation, the first control signal further indicates a second time location, and the first time window further includes the second time location.

In another possible implementation, the first control signal further indicates a second time location, and the at least one processor 1901 is further configured to:
control, based on the first control signal, the detector to receive the second echo signal in the first time window and a second time window, where the second time window is related to the second time location and the first duration, and the second time window includes the second time location.

In another possible implementation, the first control signal further indicates a third time location, and the at least one processor 1901 is further configured to:
control the laser emitter to emit a third laser signal; and
control, based on the first control signal, the detector to receive a third echo signal in a third time window, where the third echo signal includes a reflected signal corresponding to the third laser signal, the third echo signal is used for target detection, the third time window is related to the third time location and the first duration, and the third time window includes the third time location.

In another possible implementation, the processing apparatus 190 further includes the detector, and the detector includes at least one single-photon detection element.

In another possible implementation, the processing apparatus 190 further includes the detector, where the detector includes a plurality of detection elements, and one detection element corresponds to an output signal of one pixel.

The first feature signal includes a signal obtained by performing superposition processing on output signals of adjacent pixels, and the adjacent pixels correspond to at least two adjacent detection elements in the detector.

In another possible implementation, the processing apparatus 190 further includes the laser emitter and at least one optical element.

A start time of the first detection time window is after a fourth time location or is the same as a fourth time location; and the fourth time location corresponds to a distance of the second laser signal from the laser emitter to a first optical element in the at least one optical element, and the first optical element is an outermost optical element that belongs to the processing apparatus and that is in an emitting optical path of the second laser signal.

In another possible implementation, the processing apparatus 190 includes the detector, and the detector is further configured to obtain a to-be-detected signal based on the first echo signal.

The processor 1901 is further configured to:
obtain the first time location based on the to-be-detected signal; and
output the first control signal (through the communication interface 1902), where the first control signal is used to control the laser transmitter and/or the detector.

In another possible implementation, the at least one processor 1901 is further configured to obtain a detection result of a detection area based on the second echo signal.

An embodiment of this application further provides a terminal. The terminal is configured to implement the method described in the embodiment shown in FIG. 6.

In a possible design, the terminal includes the foregoing detection apparatus, for example, the detection apparatus shown in FIG. 2, FIG. 4, FIG. 5, or FIG. 15, and/or the terminal includes the foregoing detection apparatus 180 or processing apparatus 190, for example, the processing apparatus shown in FIG. 18 or FIG. 19.

Optionally, the terminal may be a terminal like a fusion detection apparatus, a vehicle, an uncrewed aerial vehicle, or a robot.

An embodiment of this application further provides a computer-readable storage medium. The computer-readable storage medium stores a computer program. When the computer program is run on one or more processors, the method in the embodiment shown in FIG. 6 is implemented.

An embodiment of this application further provides a computer program product. When the computer program product runs on one or more processors, the method in the embodiment shown in FIG. 6 is implemented.

An embodiment of this application further provides a chip system. The chip system includes a communication interface and at least one processor. The communication interface is configured to provide an information input/output for the at least one processor, and/or the communication interface is configured to send/receive data. The processor is configured to invoke a computer program (or computer instructions), to implement the method in the embodiment shown in FIG. 6.

It should be noted that, in this application, terms such as "an example" or "for example" indicate an example, an instance, or an illustration. Any embodiment or design scheme described as "example" or "for example" in this application should not be construed as being more preferred or advantageous than other embodiments or design schemes. Exactly, use of the word "example", "for example", or the like is intended to present a related concept in a specific manner.

In embodiments of this application, "at least one" means one or more, and "a plurality of" means two or more. At least one of the following items (pieces) or a similar expression thereof means any combination of these items, including any combination of singular items (pieces) or plural items (pieces). For example, at least one item (piece) of a, b, or c may represent a, b, c, (a and b), (a and c), (b and c), or (a, b, and c), where a, b, and c may be singular or plural. "And/or" describes an association relationship between associated objects and represents that three relationships may exist. For example, A and/or B may represent the following three cases: Only A exists, both A and B exist, and only B exists, where A and B may be singular or plural. A character "/" generally indicates an "or" relationship between the associated objects.

In embodiments of this application, according to the context, the term "when" may be interpreted as a meaning of "if", "after", "in response to determining", or "in response to detection".

In addition, unless otherwise specified, ordinal numbers such as "first" and "second" used in embodiments of this application are used to distinguish between a plurality of obj ects, and are not intended to limit an order, a time sequence, priorities, or importance of the plurality of objects. For example, the first sub-control unit and the second sub-control unit are merely used to distinguish between different control units, but do not indicate differences in structures, principles, importance, and the like of the two control units.

## Claims

1. A detection control method, comprising:
controlling a laser emitting unit to emit a first laser signal;
controlling a laser detection unit to receive a first echo signal comprising a reflected signal corresponding to the first laser signal;
outputting a first control signal based on the first echo signal, wherein the first control signal indicates a first time location;
controlling the laser emitting unit to emit a second laser signal; and
controlling, based on the first control signal, the laser detection unit to receive a second echo signal in a first time window, wherein the second echo signal comprises a reflected signal corresponding to the second laser signal, and the second echo signal is used for target detection, wherein
the first time window is related to the first time location and first duration, the first time window comprises the first time location, and the first duration is predefined or preconfigured.

2. The method according to claim 1, wherein the first time location corresponds to a first feature signal, the first feature signal is obtained based on the first echo signal, and the first feature signal comprises at least one of a pulse signal, a peak signal, or a rising-edge signal.

3. The method according to claim 1 or 2, wherein the first control signal further indicates a second time location, and the first time window further comprises the second time location.

4. The method according to claim 1 or 2, wherein the first control signal further indicates a second time location; and the controlling, based on the first control signal, the laser detection unit to receive a second echo signal in a first time window comprises:
controlling, based on the first control signal, the laser detection unit to receive the second echo signal in the first time window and a second time window, wherein the second time window is related to the second time location and the first duration, and the second time window comprises the second time location.

5. The method according to any one of claims 1 to 4, wherein the first control signal further indicates a third time location, and the method further comprises:
controlling the laser emitting unit to emit a third laser signal; and
controlling, based on the first control signal, the laser detection unit to receive a third echo signal in a third time window, wherein the third echo signal comprises a reflected signal corresponding to the third laser signal, the third echo signal is used for target detection, the third time window is related to the third time location and the first duration, and the third time window comprises the third time location.

6. The method according to any one of claims 1 to 5, wherein the laser detection unit comprises at least one single-photon detection element.

7. The method according to any one of claims 1 to 6, wherein the laser detection unit comprises a plurality of detection elements, and one detection element corresponds to an output signal of one pixel; and
the first feature signal comprises a signal obtained by performing superposition processing on output signals of adjacent pixels, and the adjacent pixels correspond to at least two adjacent detection elements in the laser detection unit.

8. The method according to any one of claims 1 to 7, wherein the method is applied to a laser detection apparatus; and
a start time of the first time window is after a fourth time location or is the same as a fourth time location; and the fourth time location corresponds to a distance from the laser emitting unit to a first optical element, and the first optical element is an outermost optical element that belongs to the laser detection apparatus and that is in an emitting optical path of the second laser signal.

9. The method according to any one of claims 1 to 8, wherein the outputting a first control signal based on the first echo signal comprises:
obtaining, based on the first echo signal, a to-be-detected signal by using the laser detection unit;
obtaining the first time location based on the to-be-detected signal; and
outputting the first control signal, wherein the first control signal is used to control the laser emitting unit and/or the laser detection unit.

10. The method according to any one of claims 1 to 9, wherein the controlling a laser emitting unit to emit a first laser signal comprises:
outputting a second control signal; and
controlling, based on the second control signal, the laser emitting unit to emit the first laser signal; and
the controlling the laser emitting unit to emit a second laser signal comprises:
outputting a third control signal; and
controlling, based on the third control signal, the laser emitting unit to emit the second laser signal.

11. The method according to any one of claims 1 to 10, wherein the controlling a laser detection unit to receive a first echo signal comprising a reflected signal corresponding to the first laser signal comprises:
outputting a fourth control signal; and
controlling, based on the fourth control signal, the laser detection unit to receive the first echo signal comprising the reflected signal corresponding to the first laser signal.

12. A detection apparatus, wherein the detection apparatus comprises a laser emitting unit, a laser detection unit, and at least one processing unit, wherein
the at least one processing unit is configured to control the laser emitting unit to emit a first laser signal, and is configured to control the laser detection unit to receive a first echo signal comprising a reflected signal corresponding to the first laser signal;
the at least one processing unit is further configured to output a first control signal based on the first echo signal, wherein the first control signal indicates a first time location;
the at least one processing unit is further configured to control the laser emitting unit to emit a second laser signal; and
the at least one processing unit is further configured to control, based on the first control signal, the laser detection unit to receive a second echo signal in a first time window, wherein the second echo signal comprises a reflected signal corresponding to the second laser signal, and the second echo signal is used for target detection, wherein
the first time window is related to the first time location and first duration, the first time window comprises the first time location, and the first duration is predefined or preconfigured.

13. The apparatus according to claim 12, wherein the first time location corresponds to a first feature signal, the first feature signal is obtained based on the first echo signal, and the first feature signal comprises at least one of a pulse signal, a peak signal, or a rising-edge signal.

14. The apparatus according to claim 12 or 13, wherein the first control signal further indicates a second time location, and the first time window further comprises the second time location.

15. The apparatus according to claim 12 or 13, wherein the first control signal further indicates a second time location; and the at least one processing unit is further configured to:
control, based on the first control signal, the laser detection unit to receive the second echo signal in the first time window and a second time window, wherein the second time window is related to the second time location and the first duration, and the second time window comprises the second time location.

16. The apparatus according to any one of claims 12 to 15, wherein the first control signal further indicates a third time location; and
the at least one processing unit is further configured to control the laser emitting unit to emit a third laser signal, and is configured to control, based on the first control signal, the laser detection unit to receive a third echo signal in a third time window, wherein the third echo signal comprises a reflected signal corresponding to the third laser signal, the third echo signal is used for target detection, the third time window is related to the third time location and the first duration, and the third time window comprises the third time location.

17. The apparatus according to any one of claims 12 to 16, wherein the laser detection unit comprises at least one single-photon detection element.

18. The apparatus according to any one of claims 12 to 17, wherein the laser detection unit comprises a plurality of detection elements, and one detection element corresponds to an output signal of one pixel; and
the first feature signal comprises a signal obtained by performing superposition processing on output signals of adjacent pixels, and the adjacent pixels correspond to at least two adjacent detection elements in the laser detection unit.

19. The apparatus according to any one of claims 12 to 18, wherein the detection apparatus further comprises at least one optical element; and
a start time of the first detection time window is after a fourth time location or is the same as a fourth time location; and the fourth time location corresponds to a distance of the second laser signal from the laser emitting unit to a first optical element in the at least one optical element, and the first optical element is an outermost optical element that belongs to the detection apparatus and that is in an emitting optical path of the second laser signal.

20. The apparatus according to any one of claims 12 to 19, wherein the laser detection unit is further configured to obtain a to-be-detected signal based on the first echo signal; and
the at least one processing unit is configured to:
obtain the first time location based on the to-be-detected signal; and
output the first control signal, wherein the first control signal is used to control the laser emitting unit and/or the laser detection unit.

21. The apparatus according to any one of claims 12 to 20, wherein the at least one processing unit is further configured to obtain a detection result of a detection area based on the second echo signal.

22. A processing apparatus, wherein the processing apparatus comprises at least one processor and a communication interface, the communication interface is configured to provide instructions or a data input and/or output for the processor, and the at least one processor is configured to perform the following operations:
controlling a laser emitter to emit a first laser signal;
controlling a detector to receive a first echo signal comprising a reflected signal corresponding to the first laser signal;
outputting a first control signal based on the first echo signal, wherein the first control signal indicates a first time location;
controlling the laser emitter to emit a second laser signal; and
controlling, based on the first control signal, the detector to receive a second echo signal in a first time window, wherein the second echo signal comprises a reflected signal corresponding to the second laser signal, and the second echo signal is used for target detection, wherein
the first time window is related to the first time location and first duration, the first time window comprises the first time location, and the first duration is predefined or preconfigured.

23. The apparatus according to claim 22, wherein the first time location corresponds to a first feature signal, the first feature signal is obtained based on the first echo signal, and the first feature signal comprises at least one of a pulse signal, a peak signal, or a rising-edge signal.

24. The apparatus according to claim 22 or 23, wherein the first control signal further indicates a second time location, and the first time window further comprises the second time location.

25. The apparatus according to claim 22 or 23, wherein the first control signal further indicates a second time location; and the at least one processor is further configured to:
control, based on the first control signal, the detector to receive the second echo signal in the first time window and a second time window, wherein the second time window is related to the second time location and the first duration, and the second time window comprises the second time location.

26. The apparatus according to any one of claims 22 to 25, wherein the first control signal further indicates a third time location; and the at least one processor is further configured to:
control the laser emitter to emit a third laser signal; and
control, based on the first control signal, the detector to receive a third echo signal in a third time window, wherein the third echo signal comprises a reflected signal corresponding to the third laser signal, the third echo signal is used for target detection, the third time window is related to the third time location and the first duration, and the third time window comprises the third time location.

27. The apparatus according to any one of claims 22 to 26, wherein the processing apparatus comprises the detector, and the detector comprises at least one single-photon detection element.

28. The apparatus according to claim 27, wherein the detector comprises a plurality of detection elements, and one detection element corresponds to an output signal of one pixel; and
the first feature signal comprises a signal obtained by performing superposition processing on output signals of adjacent pixels, and the adjacent pixels correspond to at least two adjacent detection elements in the detector.

29. The apparatus according to any one of claims 22 to 28, wherein the processing apparatus comprises the laser emitter and at least one optical element; and
a start time of the first detection time window is after a fourth time location or is the same as a fourth time location; and the fourth time location corresponds to a distance of the second laser signal from the laser emitter to a first optical element in the at least one optical element, and the first optical element is an outermost optical element that belongs to the processing apparatus and that is in an emitting optical path of the second laser signal.

30. The apparatus according to any one of claims 22 to 29, wherein the processing apparatus comprises the detector, and the detector is further configured to obtain a to-be-detected signal based on the first echo signal; and
the at least one processor is further configured to:
obtain the first time location based on the to-be-detected signal; and
output the first control signal, wherein the first control signal is used to control the laser emitting unit and/or the laser detection unit.

31. A terminal, wherein the terminal comprises the detection apparatus according to any one of claims 12 to 21 or the processing apparatus according to any one of claims 22 to 30.

32. The terminal according to claim 31, wherein the terminal is a fusion detection apparatus, a vehicle, an uncrewed aerial vehicle, or a robot.

33. A computer-readable storage medium, wherein the computer-readable storage medium stores a computer program, and when the computer program is run on one or more processors, the method according to any one of claims 1 to 11 is performed.
